# EUROPEAN PATENT APPLICATION

(11) **EP 4 502 863 A1**
(43) Date of publication of application: **05.02.2025**
(21) Application number: 22935577.1
(22) Date of filing: 29.06.2022
(51) Int. Cl.: G06K 7/10, B41J 29/00, B41J 29/38, G06K 17/00

(54) **PRINTER, PRINTER CONTROL METHOD, AND PROGRAM**

(30) Priority: 29.03.2022 JP 2022053980
(71) Applicant: Sato Holdings Kabushiki Kaisha, Tokyo 108-0023 (JP)
(72) Inventor: SAITO, Yuji, Tokyo 108-0023 (JP)
(74) Representative: Grünecker Patent- und Rechtsanwälte PartG mbB
(86) International application number: PCT/JP2022/026031
(87) International publication number: WO 2023/188444

(57) **Abstract**

A controller of a printer executes a radio wave adjustment processing of making at least one of an output of a predetermined communication radio wave or a duty ratio of the predetermined communication radio wave in a subsequent radio wave output cycle subsequent to a radio wave output cycle in which a wireless tag is not activated larger than that in the radio wave output cycle in which the wireless tag is not activated.

## Description

### TECHNICAL FIELD

The present invention relates to a printer, a printer control method, and a program.

### BACKGROUND ART

JP2003-140548A describes a printing apparatus with a radio frequency identification (RFID) recording function as an apparatus having a function of recording to a wireless tag and a function of printing. The printing apparatus includes a feed unit that feeds continuous label paper having a plurality of RFID tag labels, a print unit that prints an image on a label, and a communication unit that communicates with a RFID tag.

### SUMMARY OF INVENTION

The RFID tag (the wireless tag) operates by electric power generated by a communication radio wave, but electromotive performance of each tag is not constant and varies. Therefore, it is required to appropriately adjust the communication radio wave output from an antenna of the communication unit so that the wireless tag having low electromotive performance can communicate. However, the above printing apparatus does not take into consideration the adjustment of the communication radio wave.

The present invention has been made in view of such a technical problem, and an object of the present invention is to appropriately adjust a communication radio wave output from an antenna of a communication unit.

According to one aspect of the present invention, a printer includes: a feed path configured to allow a continuum to be fed therethrough, the continuum having a plurality of wireless tags provided at predetermined intervals and activated when electric power generated by a predetermined communication radio wave is equal to or greater than predetermined electric power; a communication unit configured to use an antenna that generates the predetermined communication radio wave to wirelessly communicate with one of the wireless tags in the continuum, which is a wireless tag to be communicated, at a position facing the antenna; and a controller configured to control an operation of the communication unit to repeatedly output the predetermined communication radio wave from the antenna at a predetermined cycle time, wherein the controller executes a radio wave adjustment processing of making at least one of an output of the predetermined communication radio wave or a duty ratio of the predetermined communication radio wave in a subsequent radio wave output cycle subsequent to a radio wave output cycle in which the wireless tag is not activated larger than that in the radio wave output cycle in which the wireless tag is not activated.

According to the above aspect, the controller increases at least one of the output of the predetermined communication radio wave or the duty ratio of the predetermined communication radio wave in the subsequent radio wave output cycle subsequent to the radio wave output cycle in which the wireless tag is not activated. Thus, it is possible to appropriately adjust the predetermined communication radio wave output from the antenna of the communication unit so that the wireless tag having low electromotive performance is rapidly activated.

### BRIEF DESCRIPTION OF DRAWINGS

[FIG. 1] FIG. 1 is a perspective view of a printer according to a first embodiment of the present invention.
[FIG. 2] FIG. 2 is a side view showing the printer of FIG. 1 in a state in which an opening and closing cover is opened partly.
[FIG. 3] FIG. 3 is a side view showing the printer of FIG. 1 in a state in which the opening and closing cover is opened entirely.
[FIG. 4] FIG. 4 is a schematic view showing an inside wound continuum.
[FIG. 5] FIG. 5 is a diagram for explaining communication characteristics of a wireless tag when the continuum is viewed from a width direction.
[FIG. 6] FIG. 6 is a flowchart showing contents of first communication processing executed by a control unit.
[FIG. 7] FIG. 7 is a flowchart showing contents of second communication processing executed by the control unit.
[FIG. 8] FIG. 8 is a flowchart showing contents of continuous communication processing executed by the control unit.
[FIG. 9] FIG. 9 is a schematic view showing a periphery of an antenna of the printer of FIG. 1.
[FIG. 10] FIG. 10 is a diagram showing an antenna unit radio wave absorber.
[FIG. 11] FIG. 11 is a schematic view showing a cross section of a partition member of the printer of FIG. 1 as viewed from the side.
[FIG. 12] FIG. 12 is a side view showing an inside of a printer according to a second embodiment of the present invention.
[FIG. 13] FIG. 13 is a side view showing an inside of a printer according to a third embodiment of the present invention.
[FIG. 14] FIG. 14 is a schematic view showing an outside wound continuum.
[FIG. 15] FIG. 15 is a side view showing a printer according to a fourth embodiment of the present invention in a state in which an opening and closing cover is opened by 180 degrees.
[FIG. 16] FIG. 16 is a side view showing the printer of FIG. 15 in a state in which the opening and closing cover is opened by 90 degrees.
[FIG. 17] FIG. 17 is a perspective view of the printer of FIG. 15.
[FIG. 18] FIG. 18 is a side view showing a printer according to a fifth embodiment of the present invention in a state in which an opening and closing cover is opened by 90 degrees.
[FIG. 19] FIG. 19 is a side view showing an inside of the printer of FIG. 18.
[FIG. 20] FIG. 20 is a side view showing an inside of a printer according to a sixth embodiment of the present invention.
[FIG. 21] FIG. 21 is a schematic view showing a following member according to a first modification.
[FIG. 22] FIG. 22 is a schematic view showing a following member according to a second modification.
[FIG. 23] FIG. 23 is a diagram showing a modification of the partition member.
[FIG. 24] FIG. 24 is a diagram showing a modification in which the partition member is fixed to the opening and closing cover.
[FIG. 25] FIG. 25 is a diagram showing another modification in which the partition member is fixed to the opening and closing cover.
[FIG. 26] FIG. 26 is a perspective view showing a modification of a print medium supply unit.
[FIG. 27] FIG. 27 is a diagram showing a state in which a roll is not attached to the print medium supply unit of FIG. 26.
[FIG. 28] FIG. 28 is a diagram showing a state in which a roll is attached to the print medium supply unit of FIG. 26.
[FIG. 29] FIG. 29 is a side view showing a modification including a front-surface radio wave absorbing plate.
[FIG. 30] FIG. 30 is a side view showing a modification including an upstream radio wave absorbing plate.
[FIG. 31] FIG. 31 is a side view showing a modification including a discharge port upper-side radio wave absorber.
[FIG. 32] FIG. 32 is a side view showing a modification including a discharge port lower-side radio wave absorber.
[FIG. 33] FIG. 33 is a diagram showing a state in which a cutter mechanism operates in a modification including the discharge port lower-side radio wave absorber.

### DESCRIPTION OF EMBODIMENTS

Hereinafter, embodiments and modifications of the present invention will be described with reference to the accompanying drawings. In the embodiments and the modifications, the same or equivalent components and members are denoted by the same reference numerals, and redundant description thereof will be appropriately omitted. The dimensions of the members shown in the drawings are enlarged or reduced as appropriate for easy understanding. In the drawings, some of the members that are not important in describing the embodiments are omitted.

For separate components having common points, "first", "second", or the like is appended at the beginning of each name, and when the components are collectively referred, these are omitted. In addition, terms including ordinal numbers such as first, second, and the like are used to describe various components, but these terms are used only to distinguish one component from other components, and the components are not limited by these terms.

### [First Embodiment]

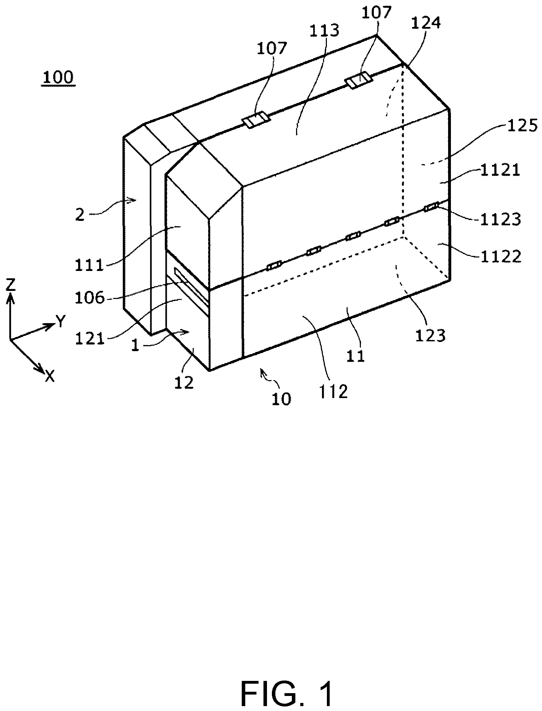

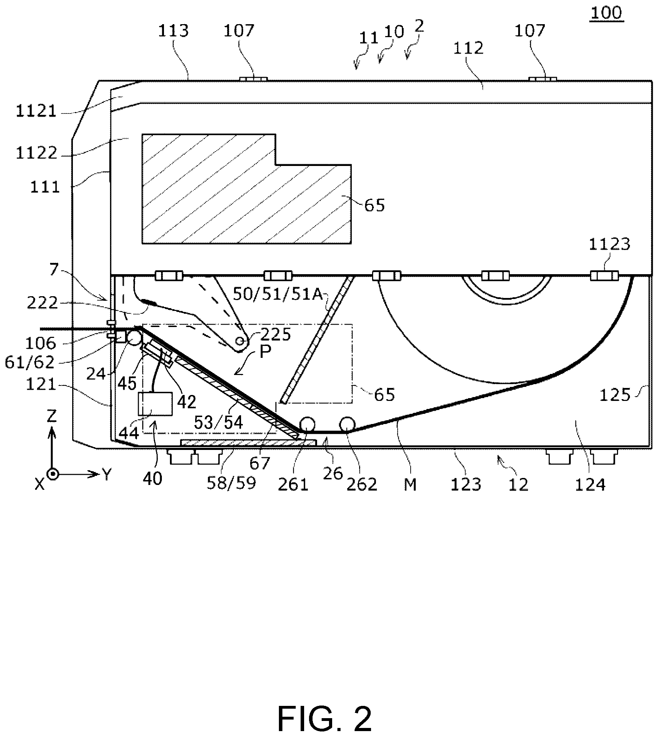

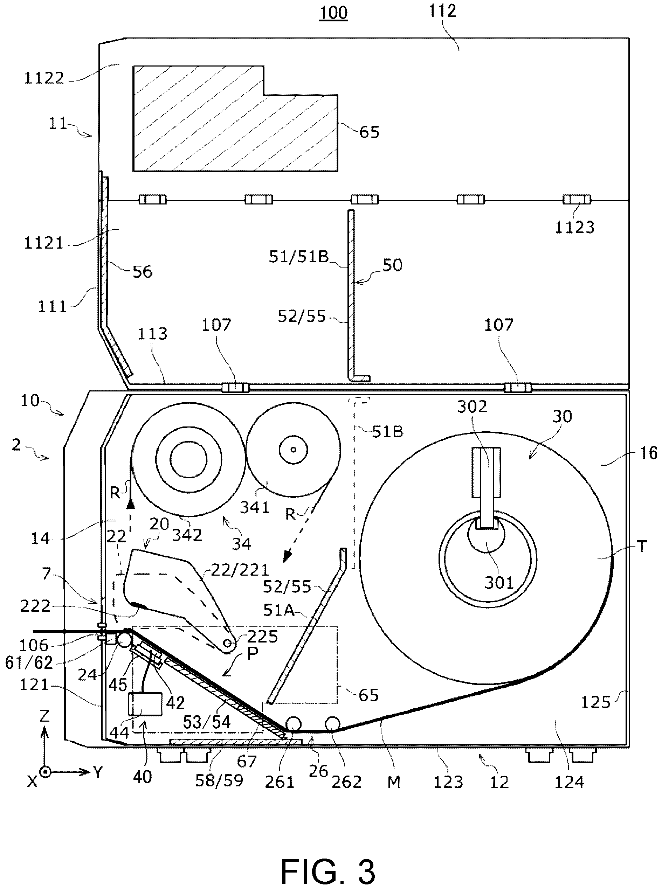

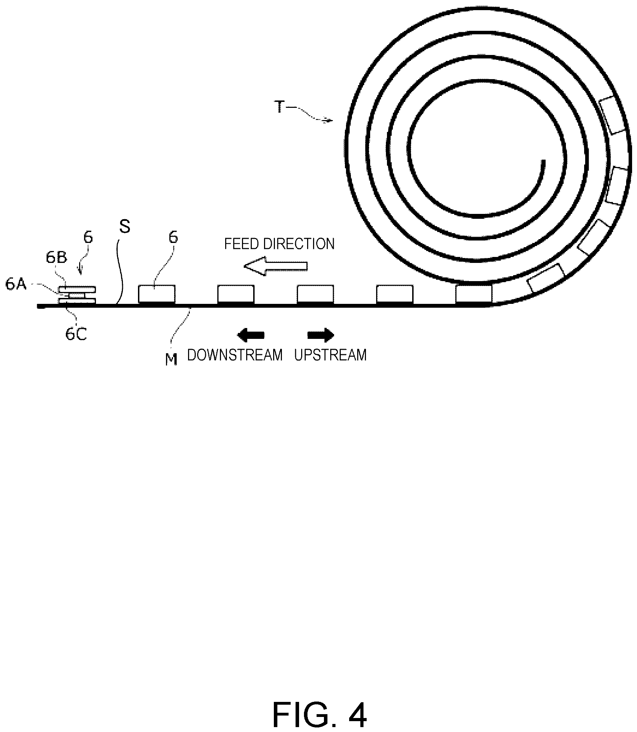

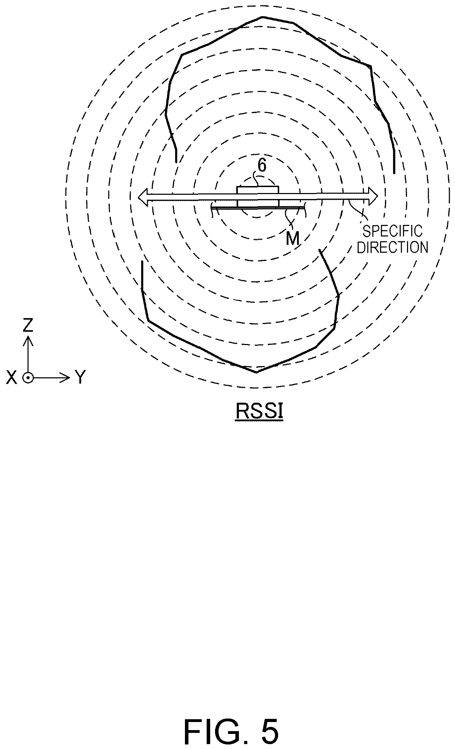

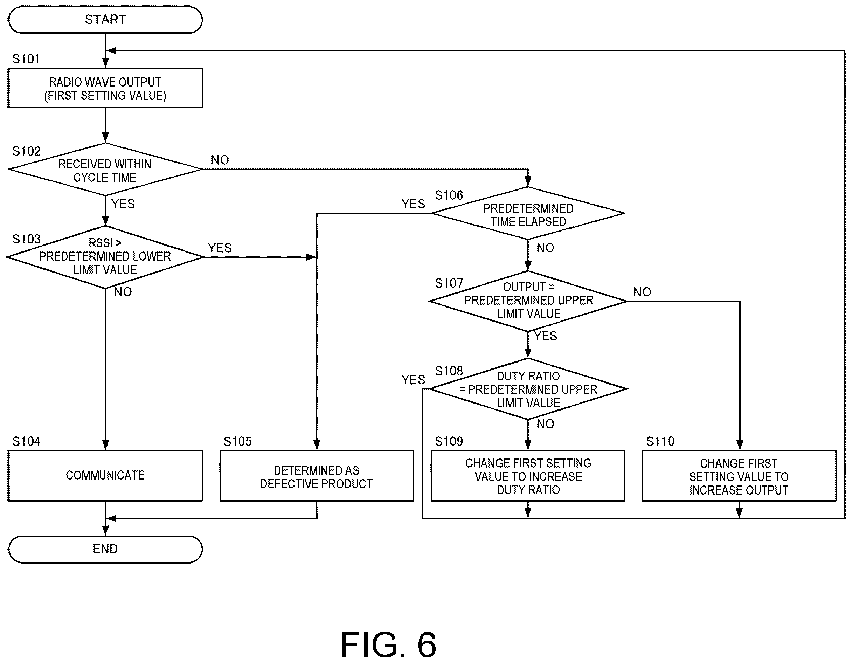

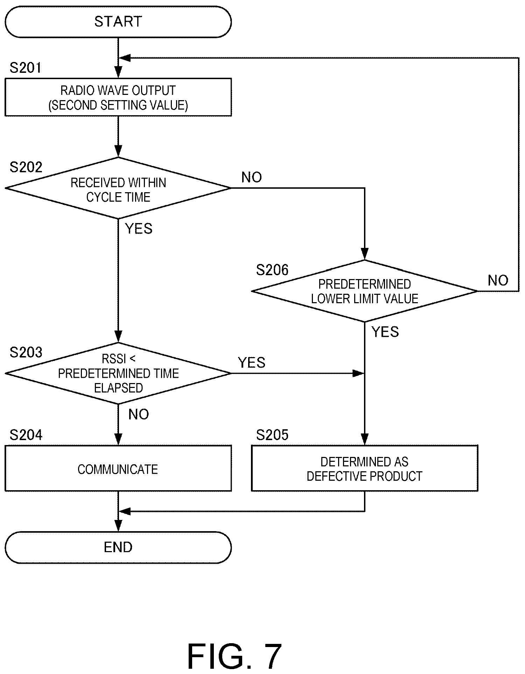

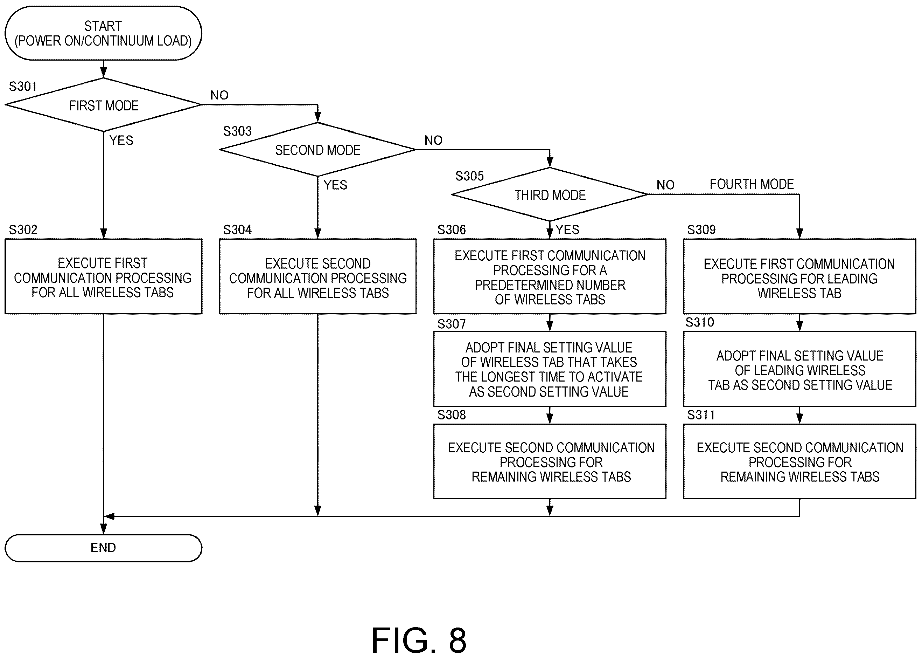

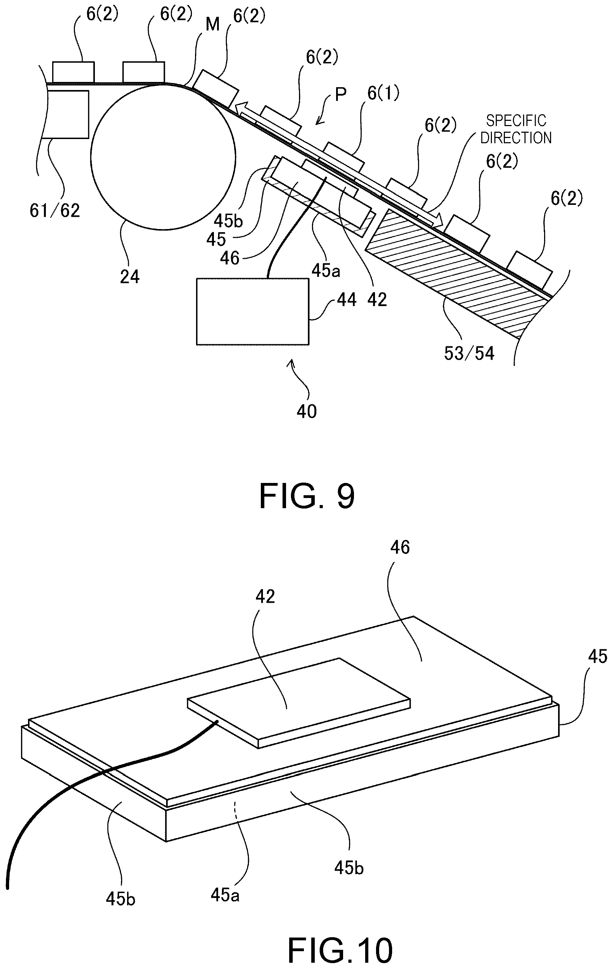

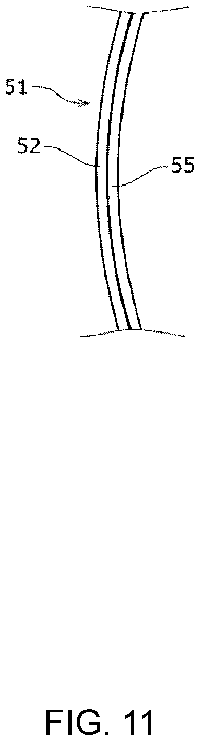

Hereinafter, a printer 100 according to a first embodiment of the present invention will be described with reference to FIGS. 1 to 11. FIG. 1 is a perspective view of the printer 100. FIG. 2 is a side view showing the printer 100 in a state in which an opening and closing cover 11 is opened partly. FIG. 3 is a side view showing the printer 100 in a state in which the opening and closing cover 11 is opened entirely. The opening and closing cover 11 can be opened entirely by 180 degrees. In addition, a second side surface portion 1122 of the opening and closing cover 11 can be opened by 180 degrees. FIG. 4 is a schematic view showing an inside wound continuum M. In FIG. 4, in order to facilitate understanding, a thickness of a wireless tag 6 and the like is depicted thicker than an actual thickness. FIG. 5 is a diagram for explaining communication characteristics of the wireless tag 6 when the continuum M is viewed from a width direction. FIG. 6 is a flowchart showing contents of first communication processing executed by a control unit 2. FIG. 7 is a flowchart showing contents of second communication processing executed by the control unit 2. FIG. 8 is a flowchart showing contents of continuous communication processing executed by the control unit 2. FIG. 9 is a schematic view showing a periphery of an antenna 42 of the printer 100. FIG. 10 is a diagram showing an antenna unit radio wave absorber 45. FIG. 11 is a schematic view showing a cross section of a partition member 51 of the printer 100 as viewed from the side.

For convenience of description, as illustrated, a certain horizontal direction is defined as an X direction, a horizontal direction orthogonal to the X direction is defined as a Y direction, and a vertical direction orthogonal to both directions is defined as a Z direction. The X direction may be referred to as a left-right direction, the Y direction may be referred to as a front-rear direction, and the Z direction may be referred to as an up-down direction. When viewed from the front, the left side is referred to as "left", the right side is referred to as "right". When viewed from the side, the left side is referred to as "front", and the right side is referred to as "rear". In addition, a dimension in the front-rear direction may be referred to as a "length", and a dimension in the left-right direction may be referred to as a "width". Such a notation does not limit a use posture of the printer 100, and the printer 100 may be used in any posture.

As shown in FIG. 3, the printer 100 of the present embodiment is a printer that performs printing on the wireless tag 6 in the continuum M (see FIG. 4) in which a plurality of wireless tags 6 are provided at predetermined intervals, and includes a print unit 20 that performs printing on the wireless tag 6, a feed path P along which the continuum M is fed in a direction toward the print unit 20 (hereinafter, referred to as a feed direction), a feed unit 7 that feeds the continuum M in the feed direction, a communication unit 40 that performs wireless communication with the wireless tag 6, a housing 10 that covers an internal space, and a functional member 50 that is provided in at least one of a predetermined inner surface of the housing 10 or the internal space and has a function of reducing an influence of a radio wave on the wireless tag 6.

The functional member 50 may include a metal body or a radio wave absorber. The functional member 50 of the present embodiment includes the partition member 51, an upstream metal body 53, an upstream radio wave absorber 54, a first cover radio wave absorber 56, a second cover radio wave absorber 65, a bottom-surface radio wave absorber 59, a downstream radio wave absorber 62, a bottom-surface metal body 58, a downstream metal body 61, and an extended metal body 67.

The communication unit 40 includes the antenna 42 and is provided upstream of the print unit 20. The communication unit 40 wirelessly communicates with the wireless tag 6 using the antenna 42.

The print unit 20 includes a platen roller 24 and a print head unit 22, and performs printing on the wireless tag 6.

The functional member 50 will be described. When the communication unit 40 of the printer 100 communicates with the wireless tag 6 to be communicated, a radio wave (a predetermined communication radio wave) from the antenna 42 may reach the wireless tag 6 other than the wireless tag 6 to be communicated. In this case, the radio wave of the communication unit 40 may affect another wireless tag 6, and the printer 100 or another wireless tag 6 may malfunction. From the viewpoint of preventing such a malfunction, it is desirable to reduce the influence of the radio wave on another wireless tag 6. Therefore, the printer 100 of the present embodiment includes the functional member 50 having a function of reducing the influence of the radio wave on the wireless tag 6. The functional member 50 can be provided in at least one of the predetermined inner surface of the housing 10 or the inner space.

The internal space includes a first space 14 that accommodates the print unit 20 and the communication unit 40, and a second space 16 that is different from the first space 14. The functional member 50 includes the partition member 51 that partitions the first space 14 and the second space 16.

In particular, the internal space includes the first space 14 that accommodates the print unit 20 and the communication unit 40, and the second space 16 that divides the wireless tag 6 accommodated in the first space 14 and the wireless tag 6 upstream of the wireless tag 6 accommodated in the first space 14 among the plurality of wireless tags 6.

As an example, the functional member 50 may include the partition member 51 that partitions the first space 14 and the second space 16, and the upstream metal body 53 disposed upstream of the communication unit 40.

The upstream metal body 53 is a metal plate disposed upstream of the communication unit 40, and reduces an influence of a strong radio wave by being brought close to the communication unit 40. By providing the upstream metal body 53, the wireless tag 6 upstream of the communication unit 40 is prevented from being electrified (energized). The upstream metal body 53 may be disposed immediately upstream of the communication unit 40.

Further, since the wireless tag 6 drawn out from the print medium supply unit 30 is susceptible to the radio wave, the partition member 51 is provided so as not to be affected by the radio wave.

An overall configuration of the printer 100 will be described. As shown in FIG. 1, when viewed from the front, the printer 100 includes a print unit 1 on the right side and a control unit (a controller and a computer) 2 on the left side.

The print unit 1 implements a tag printing function and a tag communication function under the control of the control unit 2. The tag printing function is a function of printing information such as characters, symbols, figures, or bar codes on upper paper 6B (see FIG. 4) of the wireless tag 6 temporarily attached to the continuum M. The tag communication function is a function of communicating with the wireless tag 6.

The housing 10 functions as an outer shell of the print unit 1. The housing 10 includes the opening and closing cover 11 that can be opened and closed and a housing main body 12 that supports the opening and closing cover 11 in an openable and closable manner.

The housing main body 12 includes a front surface portion 121, a bottom surface portion 123, an inner side surface portion 124, and a rear surface portion 125.

The bottom surface portion 123 is a plate-shaped portion extending in the front-rear direction along a bottom surface of the print unit 1.

The front surface portion 121 is a plate-shaped portion extending upward from a front end of the bottom surface portion 123 along a front surface of the print unit 1. The front surface portion 121 covers a lower side of the front surface of the print unit 1, and an upper portion thereof is provided with a discharge port 106 for discharging the printed continuum M.

The rear surface portion 125 is a plate-shaped portion extending upward from a rear end of the bottom surface portion 123 along a rear surface of the print unit 1.

The inner side surface portion 124 is a plate-shaped portion extending upward from a left end of the bottom surface portion 123 along a left side surface of the print unit 1. As shown in FIG. 3, the inner side surface portion 124 functions as a base to which the print unit 20, the print medium supply unit 30, the communication unit 40, an ink ribbon portion 34, and the functional member 50 are fixed and which supports these. The inner side surface portion 124 is exposed when the opening and closing cover 11 is opened. In this example, the front surface portion 121, the rear surface portion 125, and the inner side surface portion 124 are fixed to the bottom surface portion 123.

As shown in FIG. 1, the opening and closing cover 11 includes a front surface portion 111, a side surface portion 112, and an upper surface portion 113.

The front surface portion 111 is a plate-shaped portion mainly extending vertically along the front surface of the print unit 1, and covers an upper side of the front surface of the print unit 1.

The upper surface portion 113 is a plate-shaped portion extending rearward from an upper end of the front surface portion 111 along an upper surface of the print unit 1.

The side surface portion 112 is a plate-shaped portion extending downward from a right end of the upper surface portion 113 along a right side surface of the print unit 1.

The opening and closing cover 11 is provided to be openable and closable by hinges 107 provided at a left end of the upper surface portion 113. One of the hinges 107 is fixed to the left end of the upper surface portion 113, and the other one is fixed to an upper end of the inner side surface portion 124. As shown in FIG. 3, the front surface portion 111 and the side surface portion 112 are fixed to the upper surface portion 113.

In the present embodiment, the side surface portion 112 includes a first side surface portion 1121 and a second side surface portion 1122 continuous with a lower side of the first side surface portion 1121 in a state in which the opening and closing cover 11 is closed. In this example, the side surface portion 112 includes the first side surface portion 1121 and the second side surface portion 1122 that are substantially vertically divided into two equal portions.

The first side surface portion 1121 and the second side surface portion 1122 are connected by a plurality of (for example, five) hinges 1123. The second side surface portion 1122 is supported to be rotatable around the hinges 1123 relative to the first side surface portion 1121. As shown in FIG. 2, a part (the second side surface portion 1122) of the opening and closing cover 11 is openable and closable. As shown in FIG. 3, the opening and closing cover 11 is integrally openable and closable.

As shown in FIG. 3, a side surface of the housing 10 is opened in a state in which the opening and closing cover 11 is opened. Specifically, one side surface of the internal space of the housing 10 is opened in a state in which the opening and closing cover 11 is opened. As shown in FIG. 3, the internal space includes the first space 14 that accommodates the print unit 20 and the communication unit 40, and the second space 16 that is different from the first space 14. That is, the housing 10 is configured such that the first space 14 and the second space 16 are exposed in a state in which the opening and closing cover 11 is opened.

With the configuration, front sides of the first space 14 and the second space 16 as viewed from an operator are opened. When the opening and closing cover 11 is opened, an open end side (a side opposite to the inner side surface portion 124) of a support shaft 301 that supports a roll T (the roll-shaped continuum M) is opened, and thus the replacement of an ink ribbon R and the continuum M and the maintenance of an inside of the unit can be performed. An opening direction of the opening and closing cover 11 is a direction in which a space on the front side is opened when the opening and closing cover 11 is opened.

An inside of the printer 100 will be described. As shown in FIG. 3, inside the printer 100, there are provided the print medium supply unit 30 disposed at the rear, the print unit 20 and the communication unit 40 disposed at the front, the ink ribbon portion 34 disposed above the print unit 20 and the communication unit 40, and the functional member 50.

The print unit 20 of the present embodiment employs a thermal transfer method in which printing is performed on the continuum M by transferring ink of the ink ribbon R to which printing ink is applied. The print unit 20 may employ a thermosensitive coloring method.

The continuum M is wound to form a roll T, is held by the print medium supply unit 30, is sequentially drawn out from the roll T, and is fed in the feed direction. In the feed direction of the continuum M, with respect to the print unit 20 as a reference, a side of the print medium supply unit 30 is referred to as an upstream side, and an opposite side thereof is referred to as a downstream side. The print medium supply unit 30 is located on a most upstream side.

The print unit 20 includes the print head unit 22, the platen roller 24 and a lower guide unit (not shown) disposed below the print head unit 22, and a damper mechanism 26 disposed behind the platen roller 24 and the lower guide unit. The damper mechanism 26 is disposed upstream of the print head unit 22 and the platen roller 24.

The lower guide unit is a member that extends in the front-rear direction and guides the fed continuum M.

A front portion of the print head unit 22 is supported so as to be swingable in the up-down direction about a rear rotation shaft 225. The print head unit 22 has an open state (indicated by a solid line) in which the print head unit 22 is opened with respect to the platen roller 24 and a closed state (indicated by a broken line) in which the print head unit 22 is closed with respect to the platen roller 24. That is, the print head unit 22 is configured to be switchable between the open state and the closed state by swinging.

A print head unit position detection sensor (not shown) that detects whether the print head unit 22 is in a closed state is provided in a vicinity of the print head unit 22.

In the open state, the front portion of the print head unit 22 is raised and separated from the platen roller 24. In this state, it is possible to set and replace the continuum M and the ink ribbon R.

In the closed state, the front portion of the print head unit 22 is lowered, and a thermal head 222 provided in a front lower portion of a head main body 221 faces the platen roller 24 with the continuum M and the ink ribbon R interposed therebetween. In other words, the continuum M is nipped between the thermal head 222 and the platen roller 24 together with the ink ribbon R. In the closed state, a paper passing route that is a feed path P of the continuum M is formed between the print head unit 22 and the platen roller 24 and the lower guide unit. The discharge port 106 is provided downstream of the paper passing route.

The platen roller 24 is feeding means for feeding the continuum M drawn out from the print medium supply unit 30 to the discharge port 106 along the paper passing route. A surface of the platen roller 24 is coated with an elastic material such as hard rubber. The platen roller 24 is disposed to vertically face the thermal head 222 in the closed state so as to be rotatable in forward and reverse directions.

The platen roller 24 is rotationally driven by a drive mechanism (not shown) including a motor, a rotation transmitter, and the like. When the print head unit 22 is in the closed state and the platen roller 24 rotates in the forward direction, the continuum M is fed toward the discharge port 106. That is, the print head unit 22 and the platen roller 24 constitute the feed unit 7 that nips and conveys the continuum M.

A print medium position detection sensor (not shown) is provided between the thermal head 222 and the damper mechanism 26 in the paper passing route of the continuum M. The print medium position detection sensor detects a position of the wireless tag 6 of the continuum M by detecting a position detection mark (not shown) provided on the continuum M. The print medium position detection sensor may be, for example, a light reflection type or light transmission type sensor.

The damper mechanism 26 is a mechanism that applies tension to the continuum M. The damper mechanism 26 of the present embodiment includes a first damper roller 261 and a second damper roller 262 provided upstream of the first damper roller 261. The first damper roller 261 and the second damper roller 262 are swingably supported so as to apply tension to the continuum M when the print head unit 22 is in the closed state.

The ink ribbon portion 34 is a mechanism that supplies and rolls up the ink ribbon R to which the printing ink is applied. The ink ribbon portion 34 includes a ribbon supply unit 341 and a ribbon roll up unit 342 disposed in front of the ribbon supply unit 341.

The ribbon supply unit 341 is a mechanism that rotatably supports the ink ribbon R wound in a roll shape.

The ribbon roll up unit 342 is a mechanism that rolls up and collects the printed ink ribbon R.

The ink ribbon R is pulled out from the ribbon supply unit 341, passes under the print head unit 22, and is rolled up by the ribbon roll up unit 342.

The continuum M will be described. As shown in FIG. 4, the continuum M includes the plurality of wireless tags 6 and a strip-shaped liner sheet S that supports the plurality of wireless tags 6. The plurality of wireless tags 6 are temporarily attached to the liner sheet S at predetermined intervals along a longitudinal direction thereof.

In order to facilitate peeling of the wireless tag 6, a surface of the liner sheet S (a surface with which an adhesive surface of the wireless tag 6 comes into contact) is coated with a release agent such as silicone. The position detection mark (not shown) indicating the position of the wireless tag 6 is provided on a back surface (a surface to which the wireless tag 6 is not attached) of the liner sheet S.

The wireless tag 6 includes an electronic circuit unit 6A and the upper paper 6B stacked on a front side of the electronic circuit unit 6A, and is attached to the liner sheet S with an adhesive 6C. The upper paper 6B is plain paper in this example. The upper paper 6B may be thermal paper. When the printer 100 employs the thermosensitive coloring method, the upper paper 6B is thermal paper.

As shown in FIG. 3, the print medium supply unit 30 holds the roll T of the continuum M and supplies the continuum M to the print unit 20.

The print medium supply unit 30 includes the support shaft 301 and a roll guide unit 302 provided at one end of the support shaft 301. The support shaft 301 is a component that rotatably supports the roll T of the continuum M. The roll guide unit 302 is a component that fixes the roll T of the continuum M. The roll guide unit 302 is provided so as to be movable along an axial direction of the support shaft 301 so that the position can be changed according to a length in a width direction of the continuum M.

In the example of FIG. 4, the roll T is inside wound. In the inside winding, the wireless tag 6 is wound in a state of being located inside the continuum M. Thus, in the inside winding, the wireless tag 6 is not exposed to an outer peripheral surface of the roll T. In the inside winding, the continuum M is drawn out downward from a position behind a center of the print medium supply unit 30.

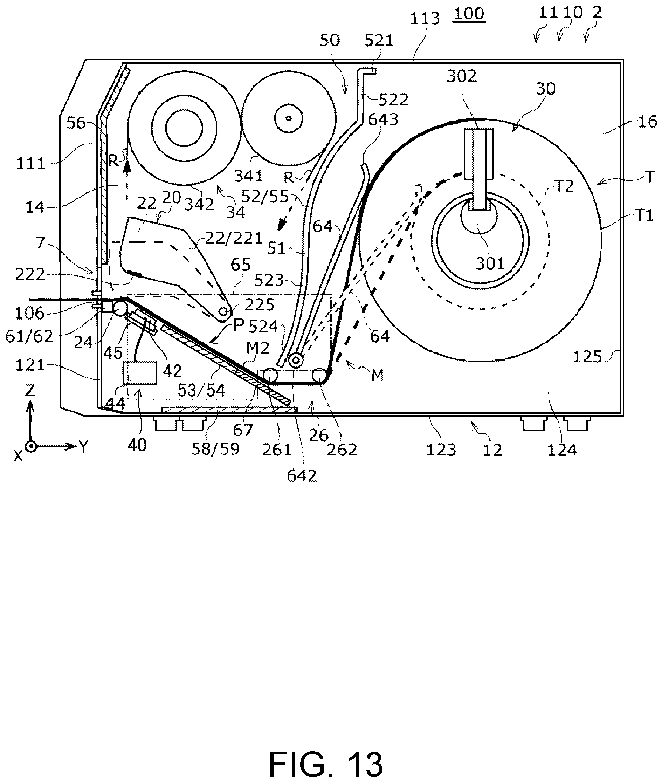

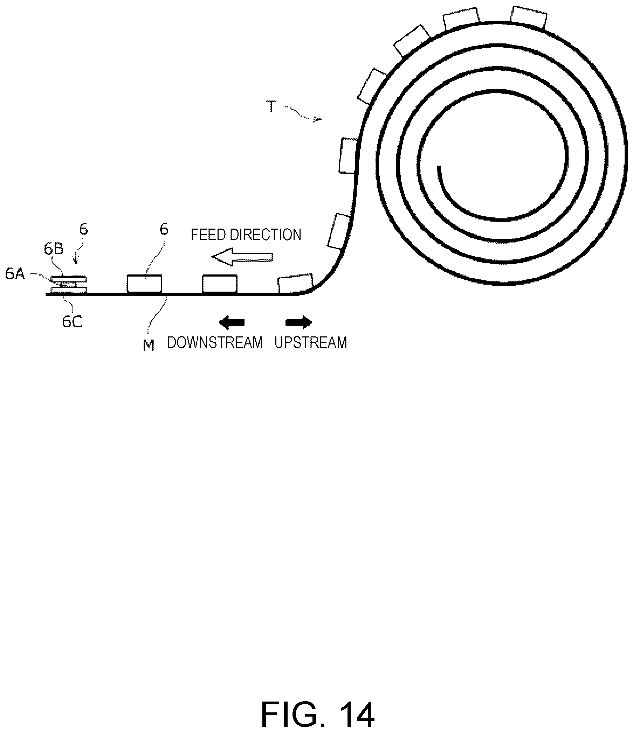

The roll T may be outside wound. In the outside winding, the wireless tag 6 is wound in a state of being located outside the continuum M. Thus, in the outside winding, the wireless tag 6 is exposed to the outer peripheral surface of the roll T. In the outside winding, the continuum M is drawn out downward from a position in front of the center of the print medium supply unit 30 (see FIGS. 13 and 14).

Regardless of whether the roll T is outside wound or inside wound, the paper passing route of the continuum M of the print unit 20 is the same. In addition, regardless of whether the roll T is outside wound or the inside wound, the continuum M is fed in a state in which the surface to which the wireless tag 6 is temporarily attached faces upward. The surface of the continuum M to which the wireless tag 6 is temporarily attached may be referred to as a print surface.

In the printer 100, the continuum M drawn out in a sheet shape from the print medium supply unit 30 is fed to the paper passing route between the print head unit 22 and the platen roller 24 via the damper mechanism 26. While the continuum M is being fed, the printer 100 causes a heating element of the thermal head 222 to generate heat in a predetermined pattern at a timing based on information detected by the print medium position detection sensor. As a result, characters, symbols, figures, bar codes, and the like are printed on the wireless tag 6 of the continuum M. After printing, the wireless tag 6 (the continuum M) is discharged from the discharge port 106 to an outside of the printer 100.

The electronic circuit unit 6A includes an IC chip (not shown) having a central processing unit (CPU), a memory, a tag-side communication circuit, and the like, and a tag-side antenna (not shown) for communication.

The wireless tag 6 of the present embodiment employs a communication method of BLUETOOTH (registered trademark) Low Energy (BLE) which is a low power consumption communication mode of BLUETOOTH (registered trademark). In this case, a communicable distance is longer than that of near field communication (NFC, registered trademark), and power consumption is smaller than that of WI-FI (registered trademark).

The wireless tag 6 is configured to be activated (the electronic circuit unit 6A operates) when electric power generated in the wireless tag 6 by a predetermined communication radio wave from the antenna 42 of the communication unit 40 becomes equal to or greater than predetermined electric power, and does not use a battery.

In an activated state, the wireless tag 6 transmits a radio wave for communicating with the communication unit 40. That is, the wireless tag 6 can communicate with the communication unit 40 in the activated state, and cannot communicate with the communication unit 40 in a non-activated state.

FIG. 5 is a diagram for explaining communication characteristics of the wireless tag 6 when the continuum M is viewed from the width direction (the X direction in FIG. 3). Specifically, FIG. 5 shows a received signal strength indicator (RSSI) for each direction when the predetermined communication radio wave is supplied to the wireless tag 6 from each direction orthogonal to an X axis on a YZ plane in a state in which the wireless tag 6 is located on the YZ plane.

In FIG. 5, when the predetermined communication radio wave is supplied to the wireless tag 6 from a specific direction indicated by an arrow, the RSSI is not shown. This means that the electric power generated in the wireless tag 6 by the predetermined communication radio wave from the specific direction does not exceed the predetermined electric power and the wireless tag 6 is not activated.

As can be seen from FIG. 5, the wireless tag 6 is not activated not only when the predetermined communication radio wave is supplied to the wireless tag 6 from the specific direction strictly but also when the predetermined communication radio wave is supplied to the wireless tag 6 from a direction along the specific direction. That is, the wireless tag 6 of the present embodiment cannot be activated by the predetermined communication radio wave from the direction along the specific direction even within a range that the predetermined communication radio wave reaches. As shown in FIG. 5, the specific direction includes a direction from one side to the other side and a direction from the other side to one side with respect to the wireless tag 6 as a reference. Since the specific direction itself is also along the specific direction, the direction along the specific direction includes the specific direction itself.

As described above, the wireless tag 6 cannot be activated by the predetermined communication radio wave from the direction along the specific direction even within the range that the predetermined communication radio wave reaches.

The communication unit 40 will be described. The communication unit 40 includes the antenna 42 that generates the predetermined communication radio wave, and a communication circuit 44 connected to the antenna 42. The antenna 42 may be included in the lower guide unit.

The communication unit 40 uses the antenna 42 to wirelessly communicate with one wireless tag 6 in the continuum M, which is the wireless tag 6 to be communicated, at a position facing the antenna 42.

Next, the control unit 2 will be described. The control unit 2 includes a CPU, a memory, an input and output interface, and the like. The control unit 2 may also be implemented by a plurality of microcomputers. Print instruction data (issuance instruction data) from an external computer or the like (not shown), a detection signal of the print medium position detection sensor, a detection signal of a print head unit position detection sensor, and the like are input to the control unit 2 via the input and output interface. The control unit 2 causes the CPU to execute a program stored in the memory, and controls operations of the thermal head 222, a motor for driving the platen roller 24, the communication unit 40, and the like. Various programs executed by the control unit 2 may be stored in a non-transitory recording medium such as a CD-ROM.

The control unit 2 communicates with the wireless tag 6 using the communication unit 40. The control unit 2 functions as a reading device that reads information written in the wireless tag 6. The control unit 2 functions as a writing device that writes predetermined information to the wireless tag 6. The control unit 2 may not have a function as a writing device. For example, in a case where the wireless tag 6 is read-only, the control unit 2 may have only a function as a reading device.

When communicating with the wireless tag 6 using the communication unit 40, the control unit 2 repeatedly outputs the predetermined communication radio wave from the antenna 42 at a predetermined cycle time to activate the wireless tag 6 to be communicated.

The predetermined cycle time is, for example, about 15 [msec]. For example, the control unit 2 outputs the predetermined communication radio wave for the first 10 [msec] of the predetermined cycle time, and waits for the return of the radio wave (a first packet and RSSI) from the wireless tag 6 without outputting the predetermined communication radio wave for the remaining time. The predetermined cycle time is set in advance based on specifications of the printer 100, specifications of the wireless tag 6, experimental results, and the like. The predetermined cycle time can be changed as appropriate.

The reason why a waiting time for waiting for the return of the radio wave from the wireless tag 6 is set is that a certain amount of time is required for the wireless tag 6, which is activated by electrifying the wireless tag 6, to output the radio wave, whereas if the predetermined communication radio wave is continued to be output, as a result, the predetermined communication radio wave may be excessively output and may affect another wireless tag 6.

The control unit 2 stops the output of the predetermined communication radio wave from the antenna 42 when a predetermined time has elapsed without the communication between the wireless tag 6 to be communicated and the communication unit 40 being established. In this case, the control unit 2 determines that the wireless tag 6 for which communication with the communication unit 40 is not established is a defective product. The predetermined time is, for example, 5 [sec].

Electromotive performance of each wireless tag 6 is not constant and varies. Specifically, there is the wireless tag 6 which has low electromotive performance and requires a relatively long time to be activated. Therefore, the control unit 2 has a radio wave adjustment function of adjusting the predetermined communication radio wave output from the antenna 42 of the communication unit 40 so as to be able to rapidly communicate with the wireless tag 6 having low electromotive performance.

Further, when the plurality of wireless tags 6 are continuously issued, the printer 100 can selectively use the radio wave adjustment function as appropriate in consideration of an issuing speed (throughput), power consumption, a quality of the wireless tag 6, and the like.

Specifically, the printer 100 of the present embodiment has four continuous issuing modes (first to fourth modes). The control unit 2 executes continuous communication processing of continuously communicating with the plurality of wireless tags 6 in accordance with the modes set in the printer 100.

Hereinafter, various processing executed by the control unit 2 will be described with reference to FIGS. 6 to 8.

FIG. 6 is a flowchart showing contents of first communication processing executed by the control unit 2. FIG. 7 is a flowchart showing contents of second communication processing executed by the control unit 2. FIG. 8 is a flowchart showing contents of continuous communication processing executed by the control unit 2. When printing is performed on the wireless tag 6, the control unit 2 executes printing processing as appropriate in parallel with the processing.

First, the first communication processing will be described with reference to FIG. 6. The first communication processing is processing for communicating with one wireless tag 6. The first communication processing includes a radio wave adjustment processing for realizing the radio wave adjustment function.

In step S101, the control unit 2 outputs the predetermined communication radio wave from the antenna 42 using the communication unit 40 based on a first setting value stored in the memory.

An output (a magnitude of electric power) of the predetermined communication radio wave and a duty ratio (time for outputting the predetermined communication radio wave/predetermined cycle time) of the predetermined communication radio wave in a first radio wave output cycle after the start of the first communication processing are stored in the memory of the control unit 2 as an initial value of the first setting value. The initial value is set in advance based on specifications of the printer 100, specifications of the wireless tag 6, experimental results, and the like. The initial value can be changed as appropriate.

In step S 102, the control unit 2 determines whether the communication unit 40 has received a radio wave (a first packet and RSSI) from the wireless tag 6 within a predetermined cycle time.

When the control unit 2 determines that the communication unit 40 has received the radio wave from the wireless tag 6 within the predetermined cycle time, the processing proceeds to step S103. When the control unit 2 determines that the communication unit 40 has not received the radio wave from the wireless tag 6 within the predetermined cycle time, the processing proceeds to step S106.

In step S103, the control unit 2 determines whether the RSSI received by the communication unit 40 from the wireless tag 6 is smaller than a predetermined lower limit value.

When the control unit 2 determines that the RSSI received by the communication unit 40 from the wireless tag 6 is smaller than the predetermined lower limit value, the processing proceeds to step S105. When the control unit 2 determines that the RSSI received by the communication unit 40 from the wireless tag 6 is not smaller than the predetermined lower limit, the processing proceeds to step S104.

In step S105, the control unit 2 determines that the wireless tag 6 is a defective product.

In this case, for example, information indicating that the wireless tag 6 is the defective product may be printed on the wireless tag 6 by the print unit 20. In addition, the printer 100 may be stopped in an error state.

In step S104, the control unit 2 communicates (reads and/or writes) with the wireless tag 6 using the communication unit 40.

In S104, when only reading information written in the wireless tag 6, the control unit 2 does not output the radio wave. When writing predetermined information in the wireless tag 6, the control unit 2 outputs a communication radio wave for writing from the antenna 42 using the communication unit 40.

In step S106, the control unit 2 determines whether a predetermined time has elapsed since the start of the first communication processing. The predetermined time is, for example, 5 [sec]. The predetermined time can be changed as appropriate. The time that has elapsed since the start of the first communication processing is measured using, for example, a clock function of the CPU.

When the control unit 2 determines that the predetermined time has elapsed since the start of the first communication processing, the processing proceeds to step S105. When the control unit 2 determines that the predetermined time has not elapsed since the start of the first communication processing, the processing proceeds to step S107.

In step S107, the control unit 2 determines whether an output of the predetermined communication radio wave is a predetermined upper limit value. The predetermined upper limit value of the output of the predetermined communication radio wave is set in advance based on specifications of the printer 100, specifications of the wireless tag 6, experimental results, law and regulation, and the like. The predetermined upper limit value of the output of the predetermined communication radio wave can be changed as appropriate.

When the control unit 2 determines that the output of the predetermined communication radio wave is the predetermined upper limit value, the processing proceeds to step S108. When the control unit 2 determines that the output of the predetermined communication radio wave is not the predetermined upper limit value, the processing proceeds to step S110.

In step S110, the control unit 2 changes the first setting value to increase the output of the predetermined communication radio wave, and the processing proceeds to step S101. An amount by which the output of the predetermined communication radio wave is increased in step S110 is set in advance by experiments or the like. For example, the first setting value may be changed so that the output is increased by 1 [dbm] or may be changed so that the output is increased by several [dbm]. An amount by which the output of the predetermined communication radio wave is increased can be changed as appropriate.

In step S108, the control unit 2 determines whether a duty ratio of the predetermined communication radio wave is a predetermined upper limit value. The predetermined upper limit value of the duty ratio of the predetermined communication radio wave is set in advance based on specifications of the printer 100, specifications of the wireless tag 6, experimental results, and the like. The predetermined upper limit value of the duty ratio of the predetermined communication radio wave can be changed as appropriate.

When the control unit 2 determines that the duty ratio of the predetermined communication radio wave is the predetermined upper limit value, the processing proceeds to step S101. When the control unit 2 determines that the output of the predetermined communication radio wave is not the predetermined upper limit value, the processing proceeds to step S109.

In step S109, the control unit 2 changes the first setting value to increase the duty ratio of the predetermined communication radio wave, and the processing proceeds to step S101. An amount by which the duty ratio of the predetermined communication radio wave is increased in step S 109 is set in advance by experiments or the like. An amount by which the duty ratio of the predetermined communication radio wave is increased can be changed as appropriate.

In the example shown in FIG. 6, in a case where there is room for increasing the output of the predetermined communication radio wave, the output of the predetermined communication radio wave is preferentially increased, and in a case where the output of the predetermined communication radio wave is the predetermined upper limit value, the duty ratio of the predetermined communication radio wave is increased.

However, both the output of the predetermined communication radio wave and the duty ratio of the predetermined communication radio wave may be simultaneously increased, or the duty ratio of the predetermined communication radio wave may be preferentially increased. In a case where there is room for increasing the output of the predetermined communication radio wave, the output of the predetermined communication radio wave is preferentially increased over the duty ratio of the predetermined communication radio wave, so that the issuing speed of the wireless tag 6 can be efficiently increased.

As described above, in the first communication processing, the control unit 2 increases at least one of the output of the predetermined communication radio wave or the duty ratio of the predetermined communication radio wave in a radio wave output cycle (a subsequent radio wave output cycle) subsequent to a radio wave output cycle in which the wireless tag 6 is not activated. Accordingly, it is possible to appropriately adjust the predetermined communication radio wave output from the antenna 42 of the communication unit 40 so that the wireless tag 6 having low electromotive performance is rapidly activated.

Next, the second communication processing will be described with reference to FIG. 7. The second communication processing is processing for communicating with one wireless tag 6. The second communication processing is different from the first communication processing in that the radio wave adjustment processing for realizing the radio wave adjustment function is not included.

In step S201, the control unit 2 outputs the predetermined communication radio wave from the antenna 42 using the communication unit 40 based on a second setting value stored in the memory. The second setting value is a fixed value.

An output of the predetermined communication radio wave and a duty ratio of the predetermined communication radio wave in the second communication processing are stored in the memory of the control unit 2 as the second setting value. The second setting value is set in advance based on specifications of the printer 100, specifications of the wireless tag 6, experimental results, and the like. The second setting value can be changed as appropriate.

In the continuous communication processing shown in FIG. 8, the control unit 2 automatically sets the second setting value in the middle of continuously issuing the plurality of wireless tags 6. This will be described in detail later.

In step S202, the control unit 2 determines whether the communication unit 40 has received a radio wave (a first packet and RSSI) from the wireless tag 6 within a predetermined cycle time.

When the control unit 2 determines that the communication unit 40 has received the radio wave from the wireless tag 6 within the predetermined cycle time, the processing proceeds to step S203. When the control unit 2 determines that the communication unit 40 has not received the radio wave from the wireless tag 6 within the predetermined cycle time, the processing proceeds to step S206.

In step S203, the control unit 2 determines whether the RSSI received by the communication unit 40 from the wireless tag 6 is smaller than a predetermined lower limit value.

When the control unit 2 determines that the RSSI received by the communication unit 40 from the wireless tag 6 is smaller than the predetermined lower limit value, the processing proceeds to step S205. When the control unit 2 determines that the RSSI received by the communication unit 40 from the wireless tag 6 is not smaller than the predetermined lower limit, the processing proceeds to step S204.

In step S205, the control unit 2 determines that the wireless tag 6 is a defective product.

In this case, for example, information indicating that the wireless tag 6 is the defective product may be printed on the wireless tag 6 by the print unit 20. In addition, the printer 100 may be stopped in an error state.

In step S204, the control unit 2 communicates (reads and/or writes) with the wireless tag 6 using the communication unit 40.

In S204, when only reading information written in the wireless tag 6, the control unit 2 does not output the radio wave. When writing predetermined information in the wireless tag 6, the control unit 2 outputs a communication radio wave for writing from the antenna 42 using the communication unit 40.

In step S206, the control unit 2 determines whether a predetermined time has elapsed since the start of the second communication processing. The predetermined time is, for example, 5 [sec]. The predetermined time can be changed as appropriate. The time that has elapsed since the start of the second communication processing is measured using, for example, a clock function of the CPU.

When the control unit 2 determines that the predetermined time has elapsed since the start of the second communication processing, the processing proceeds to step S205. When the control unit 2 determines that the predetermined time has not elapsed since the start of the second communication processing, the processing proceeds to step S201.

As described above, in the second communication processing, the control unit 2 outputs the predetermined communication radio wave from the antenna 42 using the communication unit 40 based on the second setting value that is a fixed value. Accordingly, processing cost of the CPU can be reduced compared to the first communication processing.

Next, the continuous communication processing will be described with reference to FIG. 8. The continuous communication processing is started when power of the printer 100 is turned on and/or the continuum M is loaded in the printer 100 in a case where the printer 100 is set to a continuous issuing mode.

The control unit 2 determines that the continuum M is loaded in the printer 100, for example, when the print head unit 22 is changed from the open state to the closed state. The case where the continuum M is loaded in the printer 100 includes a case where the continuum M is replaced with a new continuum M and a case where the continuum M is loaded again without being replaced.

The continuous issuing mode is a mode for continuously communicating with the plurality of wireless tags 6. That is, the continuous communication processing is used when the plurality of wireless tags 6 are continuously issued. The printer 100 has a first mode to a fourth mode as the continuous issuing mode.

In step S301, the control unit 2 determines whether a mode set in the printer 100 (a current mode of the printer 100) is the first mode.

When the control unit 2 determines that the mode set in the printer 100 is the first mode, the processing proceeds to step S302. When the control unit 2 determines that the mode set in the printer 100 is not the first mode, the processing proceeds to step S303.

In step S302, the control unit 2 executes the first communication processing on all the wireless tags 6 issued in accordance with the issuance instruction data from the external computer or the like. That is, in the first mode, the control unit 2 executes the radio wave adjustment processing on each of the plurality of wireless tags 6.

Accordingly, the predetermined communication radio wave output from the antenna 42 of the communication unit 40 can be appropriately adjusted for all the wireless tags 6 to be issued. Thus, even if there is the wireless tag 6 having low electromotive performance, it is possible to suppress a decrease in the issuing speed. Further, a yield can be improved.

In step S303, the control unit 2 determines whether the mode set in the printer 100 is a second mode.

When the control unit 2 determines that the mode set in the printer 100 is the second mode, the processing proceeds to step S304. When the control unit 2 determines that the mode set in the printer 100 is not the second mode, the processing proceeds to step S305.

In step S304, the control unit 2 executes the second communication processing on all the wireless tags 6 issued in accordance with the issuance instruction data from the external computer or the like. That is, in the second mode, the control unit 2 outputs the predetermined communication radio wave from the antenna 42 to each of the plurality of wireless tags 6 using the communication unit 40 based on the second setting value that is a fixed value.

The second mode is suitable for a case where there is a high possibility of obtaining a stable issuing speed and a stable yield without adjusting the predetermined communication radio wave, that is, a case where the quality of the plurality of wireless tags 6 included in the continuum M is high.

In step S305, the control unit 2 determines whether the mode set in the printer 100 is a third mode.

When the control unit 2 determines that the mode set in the printer 100 is the third mode, the processing proceeds to step S306. When the control unit 2 determines that the mode set in the printer 100 is not the third mode, the processing proceeds to step S309. The mode of the printer 100 when it is determined that the mode set in the printer 100 is not the third mode is the fourth mode.

In step S306, the control unit 2 executes the first communication processing on a predetermined number of wireless tags 6 counting from the leading wireless tag 6 in the continuum M among the plurality of wireless tags 6 issued in accordance with the issuance instruction data from the external computer or the like. The predetermined number is any number set in advance. The predetermined number can be changed as appropriate.

In a case where the continuous communication processing is started after the continuum M is loaded in the printer 100, the leading wireless tag 6 in the continuum M is the wireless tag 6 to be communicated with which the communication unit 40 first communicates wirelessly after the continuum M is loaded in the printer 100. In this case, the wireless tag 6 located at a leading end (a most downstream side) of the continuum M is usually the leading wireless tag 6.

In a case where the continuous communication processing is started after the power of the printer 100 is turned on, the leading wireless tag 6 in the continuum M is the wireless tag 6 to be communicated with which the communication unit 40 first communicates wirelessly after the power of the printer 100 is turned on.

In step S307, the control unit 2 adopts, as the second setting value set in the second communication processing, the first setting value (hereinafter, referred to as a final setting value) in a radio wave output cycle in which the wireless tag 6 that takes a longest time to activate among the predetermined number of wireless tags 6 is activated. Note that "takes the longest time to activate" means that the time until the radio wave (the first packet and RSSI) is received is the longest.

In step S308, the control unit 2 executes the second communication processing on the remaining wireless tags 6.

As described above, in the third mode, the final setting value is used as the second setting value of the second communication processing executed for the remaining wireless tags 6, the final setting value being an adjustment result of the predetermined communication radio wave for the wireless tag 6 having the lowest electromotive performance among the predetermined number of wireless tags 6 counting from the leading wireless tag 6 in the continuum M.

Accordingly, there is a high possibility that the stable issuing speed and the stable yield can be obtained for the remaining wireless tags 6 without adjusting the predetermined communication radio wave.

In step S309, the control unit 2 executes the first communication processing on the leading wireless tag 6 in the continuum M among the plurality of wireless tags 6 issued in accordance with the issuance instruction data from the external computer or the like.

In step S310, the control unit 2 adopts the final setting value of the leading wireless tag 6 as the second setting value in the second communication processing.

In step S311, the control unit 2 executes the second communication processing on the remaining wireless tags 6.

As described above, in the fourth mode, the final setting value, which is an adjustment result of the predetermined communication radio wave for the leading wireless tag 6 in the continuum M, is used as the second setting value of the second communication processing executed for the remaining wireless tags 6.

Accordingly, there is a high possibility that the stable issuing speed and the stable yield can be obtained for the remaining wireless tags 6 without adjusting the predetermined communication radio wave.

When the third mode and the fourth mode are compared with each other, there is a higher possibility that the stable issuing speed and the stable yield can be obtained for the remaining wireless tags 6 in the third mode. Therefore, it is considered that the third mode and the fourth mode are selectively used according to the quality of the plurality of wireless tags 6 included in the continuum M.

In the example shown in FIG. 8, in step S307 of the third mode, the final setting value of the wireless tag 6 that takes the longest time to activate among the predetermined number of wireless tags 6 is adopted as the second setting value in the second communication processing. However, for example, an average value of final setting values of the predetermined number of wireless tags 6 may be adopted as the second setting value in the second communication processing.

The antenna 42 will be described with reference to FIGS. 9 and 10. FIG. 9 is a schematic view showing a periphery of the antenna 42. In FIG. 9, "(1)" is assigned to the wireless tag 6 to be communicated and "(2)" is assigned to another wireless tag 6 not to be communicated to distinguish the wireless tags 6. FIG. 10 is a diagram showing the antenna unit radio wave absorber 45.

As described above, when the communication unit 40 of the printer 100 communicates with a wireless tag 6(1) to be communicated, the radio wave (the predetermined communication radio wave) from the antenna 42 may reach another wireless tag 6(2) located upstream of the wireless tag 6(1) to be communicated or another wireless tag 6(2) located downstream of the wireless tag 6(1) to be communicated. In this case, the radio wave from the antenna 42 may affect another wireless tag 6(2), and the printer 100 and another wireless tag 6(2) may malfunction. From the viewpoint of preventing such a malfunction, it is desirable to reduce an influence of the radio wave on another wireless tag 6(2).

Therefore, in the present embodiment, as shown in FIG. 9, the antenna 42 is disposed so as to be located in the direction along the specific direction with respect to the wireless tag 6(2) adjacent to the wireless tag 6(1) to be communicated on the upstream side in the feed direction and the wireless tag 6(2) adjacent to the wireless tag 6(1) to be communicated on the downstream side in the feed direction on the feed path P.

More specifically, in the printer 100 of the present embodiment, the feed path P is formed for the plurality of wireless tags 6 around the wireless tag 6(1) to be communicated so that a direction connecting the wireless tag 6(2) adjacent to the wireless tag 6(1) to be communicated on the upstream side in the feed direction and the wireless tag 6(2) adjacent to the wireless tag 6(1) to be communicated on the downstream side in the feed direction is the specific direction.

The antenna 42 is provided on a surface of the continuum M opposite to a surface on which the wireless tag 6 is provided.

The antenna 42 is formed in a planar shape, and is disposed close to the continuum M and parallel to the wireless tag 6(1) to be communicated at a position facing the wireless tag 6(1) to be communicated. The reason why the antenna 42 is disposed parallel to the wireless tag 6(1) to be communicated is that a direction perpendicular to a plane of the antenna 42 is a direction in which the radio wave of the antenna 42 is output most strongly.

That is, the antenna 42 is disposed at a position (directly below the wireless tag 6 in FIG. 5) and in a posture at which the wireless tag 6(1) indicates a high RSSI with respect to the wireless tag 6(1) to be communicated.

The antenna 42 is disposed in a direction in which the wireless tag 6(2) is not activated, that is, the direction along the specific direction with respect to the wireless tag 6(2) adjacent to the wireless tag 6(1) to be communicated on the upstream side in the feed direction.

Further, the antenna 42 is disposed in the direction in which the wireless tag 6(2) is not activated, that is, the direction along the specific direction with respect to the wireless tag 6(2) adjacent to the wireless tag 6(1) to be communicated on the downstream side in the feed direction.

That is, the antenna 42 is positioned in the direction along the specific direction with respect to the wireless tag 6(2) adjacent to the wireless tag 6(1) to be communicated on the upstream side in the feed direction and the wireless tag 6(2) adjacent to the wireless tag 6(1) to be communicated on the downstream side in the feed direction on the feed path P.

Therefore, in the present embodiment, two wireless tags 6(2) adjacent to the wireless tag 6(1) to be communicated cannot be activated and do not communicate with the communication unit 40. This can reduce a possibility that the communication unit 40 communicates with the wireless tag 6(2) other than the wireless tag 6(1) to be communicated.

In the present embodiment, the antenna 42 is disposed in the direction along the specific direction with respect to at least one wireless tag 6(2) located further upstream of the wireless tag 6(2) adjacent to the wireless tag 6(1) to be communicated on the upstream side in the feed direction.

Further, the antenna 42 is also disposed in the direction along the specific direction with respect to at least one wireless tag 6(2) located further downstream of the wireless tag 6(2) adjacent to the wireless tag 6(1) to be communicated on the downstream side in the feed direction.

That is, the antenna 42 is located in the direction along the specific direction with respect to a plurality of wireless tags 6(2) located upstream of the wireless tag 6(1) to be communicated in the feed direction and a plurality of wireless tags 6(2) located downstream of the wireless tag 6(1) to be communicated in the feed direction on the feed path P.

Therefore, in the present embodiment, there is a wireless tag 6(2) that is not activated in addition to two wireless tags 6(2) adjacent to the wireless tag 6(1) to be communicated. This can further reduce the possibility that the communication unit 40 communicates with the wireless tag 6(2) other than the wireless tag 6(1) to be communicated.

If the antenna 42 is located in the direction along the specific direction with respect to at least one wireless tag 6(2), it is possible to reduce the possibility that the communication unit 40 communicates with the wireless tag 6(2) other than the wireless tag 6(1) to be communicated.

Thus, for example, the antenna 42 may be disposed so as to be located in the direction along the specific direction with respect to either the wireless tag 6(2) adjacent to the wireless tag 6(1) to be communicated on the upstream side in the feed direction or the wireless tag 6(2) adjacent to the wireless tag 6(1) to be communicated on the downstream side in the feed direction.

Further, the antenna 42 may be disposed so as to be located in the direction along the specific direction with respect to either the plurality of wireless tags 6(2) located upstream of the wireless tag 6(1) to be communicated in the feed direction or the plurality of wireless tags 6(2) located downstream of the wireless tag 6(1) to be communicated in the feed direction.

The antenna unit radio wave absorber 45 is provided on an opposite side of the continuum M across the antenna 42.

The antenna unit radio wave absorber 45 and other radio wave absorbers described herein are formed of, for example, a conductive radio wave absorbing material such as conductive fiber fabrics, a dielectric radio wave absorbing material obtained by mixing carbon powder or the like with a dielectric such as rubber, urethane foam, or polystyrene foam, a magnetic radio wave absorbing material made of a magnetic material such as iron, nickel, or ferrite, or the like.

The influence of the radio wave on the wireless tag 6(2) can be reduced by absorbing a radio wave output from a surface (hereinafter, referred to as a lower surface) of the antenna 42 opposite to the continuum M by the antenna unit radio wave absorber 45.

Specifically, the antenna unit radio wave absorber 45 is provided apart from the antenna 42 by being formed on a surface of a spacer 46 attached to the lower surface of the antenna 42. The spacer 46 is formed of a material, such as resin, having little influence on the radio wave.

The reason why the antenna unit radio wave absorber 45 is provided apart from the antenna 42 is that when the antenna unit radio wave absorber 45 and the antenna 42 are close to each other, a radio wave output from a surface (hereinafter, referred to as an upper surface) of the antenna 42 on the continuum M side may be absorbed by the antenna unit radio wave absorber 45 and become unstable. Therefore, the antenna unit radio wave absorber 45 is preferably about 5 mm away from the antenna 42. As long as the antenna unit radio wave absorber 45 can be provided apart from the antenna 42, the spacer 46 may not necessarily be provided.

As shown in FIGS. 9 and 10, the antenna unit radio wave absorber 45 includes a planar portion 45a and a side wall portion 45b provided around the planar portion 45a and protruding toward the antenna 42, and is formed in a container shape.

As shown in FIG. 9, the antenna unit radio wave absorber 45 is disposed such that the planar portion 45a is parallel to the continuum M. That is, the antenna unit radio wave absorber 45 is also disposed parallel to the antenna 42. Accordingly, the radio wave output from the lower surface of the antenna 42 can be efficiently absorbed, and thus the influence of the radio wave output from the lower surface of the antenna 42 on the wireless tag 6(2) can be reduced.

Further, since the antenna unit radio wave absorber 45 has the side wall portion 45b, the antenna unit radio wave absorber 45 can also absorb the radio wave diffused in an oblique direction among the radio waves output from the lower surface of the antenna 42. That is, the antenna unit radio wave absorber 45 of the present embodiment has a structure in which the radio wave output from the lower surface of the antenna 42 hardly leaks. Accordingly, the influence of the radio wave output from the lower surface of the antenna 42 on the wireless tag 6(2) can be reduced.

Further, since directivity of the antenna 42 is the strongest in the direction of the wireless tag 6(1) to be communicated, the influence of the radio wave on another wireless tag 6(2) can be further reduced.

The partition member 51 will be described. The partition member 51 is a member that partitions the internal space so that the communication unit 40 can communicate with only one wireless tag 6 (the wireless tag 6(1) shown in FIG. 9) facing the communication unit 40 among the plurality of wireless tags 6.

It is desirable that the partition member 51 can efficiently shield the radio wave. In the present embodiment, the second space 16 is a space surrounding the wireless tag 6 upstream of the wireless tag 6 accommodated in the first space 14 among the plurality of wireless tags 6. In this case, the influence of the radio wave on the second space 16, which is a space surrounding the upstream wireless tag 6, can be efficiently reduced by the partition member 51. The second space 16 is a space for dividing the wireless tag 6 accommodated in the first space 14 and the wireless tag 6 upstream of the wireless tag 6 accommodated in the first space 14 among the plurality of wireless tags 6.

As shown in FIG. 3, the partition member 51 of the present embodiment is divided into two parts, one of which is fixed to the opening and closing cover 11 and the other of which is fixed to the housing main body 12 of the housing 10. In this example, the partition member 51 includes a housing-side partition member 51A fixed to the housing main body 12 of the housing 10 and an opening and closing cover-side partition member 51B fixed to the opening and closing cover 11.

When the opening and closing cover 11 is closed, the opening and closing cover-side partition member 51B is partially adjacent to the housing-side partition member 51A. Specifically, the housing-side partition member 51A is fixed to the inner side surface portion 124. The housing main body 12 supports the opening and closing cover 11.

In FIG. 3, the opening and closing cover-side partition member 51B in a state in which the opening and closing cover 11 is closed is indicated by a broken line. The housing-side partition member 51A and the opening and closing cover-side partition member 51B may be in contact with each other or may face each other with a gap smaller than the thickness therebetween. The housing-side partition member 51A and the opening and closing cover-side partition member 51B may be functionally integrated.

The partition member 51 may be divided into three parts or more. In particular, when the opening and closing cover 11 is closed, the opening and closing cover-side partition member 51B is combined with the housing-side partition member 51A to partition the first space 14 and the second space 16.

As shown in FIG. 3, a distal end (an end opposite to a fixed end) of each of the housing-side partition member 51A and the opening and closing cover-side partition member 51B may have a shape (not shown) inclined with respect to the width direction. In this case, since the distal end has an inclined shape, when the opening and closing cover 11 is closed, the opening and closing cover 11 can be closed without interference between the housing-side partition member 51A and the opening and closing cover-side partition member 51B.

Further, the distal end of each of the housing-side partition member 51A and the opening and closing cover-side partition member 51B may have a rounded shape (not shown) instead of a sharp shape. When the distal end has a rounded shape, it is possible to prevent the continuum M and the ink ribbon R from being caught and damaged when the continuum M and the ink ribbon R are replaced.

FIG. 11 is a schematic view showing a cross section of the partition member 51 as viewed from the side. As shown in FIG. 11, the partition member 51 of the present embodiment has a partition metal body 52. In this case, the influence of the radio wave on the wireless tag 6 in the second space 16 can be reduced by shielding the radio wave.

The partition metal body 52 and other metal bodies described herein are formed of an iron-based metal, aluminum, or the like.

The partition metal body 52 is a strip-shaped member having a predetermined length in the width direction and extending substantially vertically. A predetermined portion of the partition metal body 52 may be fixed to the inner side surface portion 124 by a screw or the like.

As shown in FIG. 11, the partition member 51 of the present embodiment has a partition radio wave absorber 55. In this case, the influence of the radio wave on the wireless tag 6 in the second space 16 can be reduced by absorbing the radio wave. The partition metal body 52 and the partition radio wave absorber 55 are laminated and integrated.

The partition radio wave absorber 55 and other radio wave absorbers described herein are formed of, for example, a conductive radio wave absorbing material such as conductive fiber fabrics, a dielectric radio wave absorbing material obtained by mixing carbon powder or the like with a dielectric such as rubber, urethane foam, or polystyrene foam, a magnetic radio wave absorbing material made of a magnetic material such as iron, nickel, or ferrite, or the like.

The partition radio wave absorber 55 may be provided over an entire length and width of the partition metal body 52, or may be provided on a part thereof. FIG. 11 illustrates an example in which the partition metal body 52 is stacked on a front side of the partition radio wave absorber 55. However, the partition radio wave absorber 55 may be stacked on a front side of the partition metal body 52. As for a laminate of other metal bodies and radio wave absorbers, the front, rear, top, and bottom of the lamination can be freely configured.

As shown in FIG. 3, in the present embodiment, the first space 14 is provided with the upstream metal body 53 disposed upstream of the communication unit 40. In this case, the influence of the radio wave on the upstream wireless tag 6 can be further reduced by the upstream metal body 53.

The upstream metal body 53 is provided on a surface opposite to the print surface of the continuum M on the feed path P. The upstream metal body 53 is provided downstream of the partition member 51 and adjacent to an upstream side of the communication unit 40. In this case, the influence of the radio wave on the wireless tag 6 upstream of the communication unit 40 can be reduced.

The upstream metal body 53 of the present embodiment is a strip-shaped member that has a predetermined length in the width direction and extends obliquely downward toward the rear along the feed path P of the continuum M from immediately behind (the upstream side) the communication unit 40.

The upstream metal body 53 and other metal bodies described herein are formed of, for example, an iron-based metal, aluminum, or the like.

In the present embodiment, the upstream radio wave absorber 54 is provided along a surface of the upstream metal body 53. In this case, the influence of the radio wave on the upstream wireless tag 6 can be further reduced.

The upstream radio wave absorber 54 may be integrated with the upstream metal body 53 by being laminated over an entire length and width of the upstream metal body 53, or may be integrated with the upstream metal body 53 by being laminated partially. In a laminate of metal bodies including the upstream metal body 53 and radio wave absorbers, the front, rear, top, and bottom of the lamination can be freely configured.

When the length of the upstream metal body 53 in the width direction is smaller than the length of the continuum M in the width direction, a shielding effect may be insufficient. Therefore, in the present embodiment, the length of the upstream metal body 53 in the width direction corresponds to the length of the continuum M in the width direction. That is, the length of the upstream metal body 53 in the width direction and the length of the continuum M in the width direction have a predetermined correspondence.

For example, the length of the upstream metal body 53 in the width direction may be larger than or equal to a length of the wireless tag 6 in the width direction or larger than or equal to the length of the continuum M in the width direction. For example, the correspondence may be a relationship in which a width direction range of the upstream metal body 53 includes an entire width direction range of the continuum M. In this case, the insufficient shielding effect can be reduced.

As shown in FIG. 3, in the present embodiment, the first space 14 is provided with the extended metal body 67 disposed upstream of the upstream metal body 53. In this case, the influence of the radio wave on the wireless tag 6 upstream of the upstream metal body 53 can be further reduced by the extended metal body 67.

The extended metal body 67 is disposed adjacent to an upstream side of the upstream metal body 53 on the feed path P. The extended metal body 67 may be continuous with the upstream metal body 53 or may be separated from the upstream metal body 53 with a gap therebetween. The extended metal body 67 is provided on the surface opposite to the print surface of the continuum M on the feed path P.

The extended metal body 67 of the present embodiment is a strip-shaped member that has a predetermined length in the width direction and extends obliquely downward toward the rear along the feed path P of the continuum M from immediately behind (the upstream side) the upstream metal body 53.

A length of the extended metal body 67 in the width direction may be different from a length of the upstream metal body 53 in the width direction. The length of the extended metal body 67 in the width direction may be at least a length of the electronic circuit unit 6A of the wireless tag 6 in the width direction, and is preferably the same as a length of the print head unit 22 in the width direction.

An upstream end of the extended metal body 67 may extend to the bottom surface portion 123 of the housing 10, may be in contact with the bottom surface portion 123, or may be separated from the bottom surface portion 123 with a gap. The upstream end of the extended metal body 67 may extend to an upstream side of the second damper roller 262.

In a case where a bottom surface member of either the bottom-surface metal body 58 or the bottom-surface radio wave absorber 59 is provided on the bottom surface portion 123 of the housing 10, the upstream end of the extended metal body 67 may extend to the bottom surface member, may be in contact with the bottom surface member, or may be separated from the bottom surface member with a gap.

In the present embodiment, the extended metal body 67 is provided with an extended radio wave absorber along a surface thereof. In this case, the influence of the radio wave on the wireless tag 6 in a vicinity of the extended metal body 67 can be further reduced. The extended radio wave absorber provided in the extended metal body 67 may be integrated with the extended metal body 67 by being laminated over an entire length and width of the extended metal body 67, or may be integrated with the extended metal body 67 by being laminated partially.

By providing the extended metal body 67, the wireless tag 6 upstream of the upstream metal body 53 on the feed path P can be made less susceptible to effects of unnecessary radio waves. In particular, when an arrangement pitch of the wireless tags 6 is small, the plurality of wireless tags 6 may be located on the feed path P upstream of the upstream metal body 53. In such a case, by providing the extended metal body 67, the radio wave can be absorbed so as not to affect the wireless tag 6.

In the present embodiment, the downstream metal body 61 is provided downstream of the communication unit 40. In this case, the influence of the radio wave on the downstream wireless tag 6 can be further reduced by the downstream metal body 61. The downstream metal body 61 of the present embodiment is a strip-shaped member that has a predetermined length in the width direction and extends forward along the feed path P of the continuum M from immediately in front (the downstream side) of the communication unit 40.

In the present embodiment, the downstream radio wave absorber 62 is provided along a surface of the downstream metal body 61. In this case, the influence of the radio wave on the downstream wireless tag 6 can be further reduced. The downstream radio wave absorber 62 may be integrated with the downstream metal body 61 by being laminated over an entire length and width of the downstream metal body 61, or may be integrated with the downstream metal body 61 by being laminated partially.

It is considered that the radio wave radiated to the inner surface of the housing 10 is reflected and affects the wireless tag 6. Therefore, in the present embodiment, the housing 10 has the opening and closing cover 11 that covers the first space 14 in the closed state, and the opening and closing cover 11 is provided with a cover radio wave absorber including the first cover radio wave absorber 56 and the second cover radio wave absorber 65. In this case, the first cover radio wave absorber 56 and the second cover radio wave absorber 65 absorb the radio wave to reduce the influence of the reflected radio wave. The first cover radio wave absorber 56 and the second cover radio wave absorber 65 are strip-shaped members having a predetermined length in the width direction.

An opening and closing direction of the opening and closing cover 11 is a direction orthogonal to the feed direction of the continuum M. In this example, the opening and closing direction of the opening and closing cover 11 is the up-down direction, and the feed direction of the continuum M is the front-rear direction.

The first cover radio wave absorber 56 and the second cover radio wave absorber 65 of the opening and closing cover 11 are provided on an inner surface of the opening and closing cover 11.

The first cover radio wave absorber 56 extends on a surface orthogonal to the feed direction in a state in which the opening and closing cover 11 is closed.

The second cover radio wave absorber 65 extends parallel to the width direction of the continuum M in a state in which the opening and closing cover 11 is closed.

In the present embodiment, the first cover radio wave absorber 56 is a front surface portion radio wave absorber attached to an inner surface of the front surface portion 111. For example, the first cover radio wave absorber 56 is provided in a vertical range from a vicinity of an upper end of the front surface portion 111 to a vicinity of an upper portion of the discharge port 106.

In the present embodiment, the second cover radio wave absorber 65 is a side surface portion radio wave absorber provided on the side surface portion 112 of the opening and closing cover 11. In FIG. 3, the second cover radio wave absorber 65 in a state in which the opening and closing cover 11 is closed is indicated by a dashed line.

In the present embodiment, the second cover radio wave absorber 65 is attached to a front portion when the second side surface portion 1122 is divided into two parts in the front-rear direction. The second cover radio wave absorber 65 is a strip-shaped member along the second side surface portion 1122, has a predetermined length in the width direction, and extends in the front-rear direction.

The second cover radio wave absorber 65 has a horizontally long rectangular shape in the state shown in FIG. 2, and has a shape in which a rear lower side (a rear upper side in the figure) is cut out in a rectangular shape.

A second cover metal body may be integrated with the second cover radio wave absorber 65 by being laminated over an entire length and width of the second cover radio wave absorber 65, or may be integrated with the second cover radio wave absorber 65 by being laminated partially. The present embodiment can reduce the influence of the radio wave radiated to the side surface portion 112 by providing the second cover radio wave absorber 65.

The second cover radio wave absorber 65 is disposed on a side portion of the partition member 51 and is partially adjacent to the partition member 51 in a state in which the opening and closing cover 11 is closed. The second cover radio wave absorber 65 and the partition member 51 may be in contact with each other or may be slightly separated from each other. This configuration can reduce leakage of the radio wave.

In the present embodiment, the side surface of the housing 10 is opened in a state in which the opening and closing cover 11 is opened. In the housing 10, the first space 14 and the second space 16 are exposed in a state in which the opening and closing cover 11 is opened. In this case, the continuum M can be easily attached and detached, and the ink ribbon R can be easily replaced. The replacement of the ink ribbon R and the continuum M and the maintenance of the inside of the unit can be performed.

In the present embodiment, at least one of the bottom-surface metal body 58 or the bottom-surface radio wave absorber 59 is provided along a bottom surface (the bottom surface portion 123) of the housing 10. In this case, the influence of the radio wave radiated to the bottom surface portion 123 can be reduced.

The bottom-surface metal body 58 is a strip-shaped member having a predetermined length in the width direction and extending in the front-rear direction. A front end of the bottom-surface metal body 58 is located forward of a rear end of the upstream metal body 53, and a rear end of the bottom-surface metal body 58 is located rearward of a front end of the partition member 51. The bottom-surface radio wave absorber 59 may be integrated with the bottom-surface metal body 58 by being laminated over an entire length and width of the bottom-surface metal body 58, or may be integrated with the bottom-surface metal body 58 by being laminated partially.

A main configuration and effects of the printer 100 according to the present embodiment configured as described above will be described.

The printer 100 includes: a feed path P configured to allow a continuum M to be fed therethrough, the continuum M having a plurality of wireless tags 6 provided at predetermined intervals and activated when electric power generated by a predetermined communication radio wave becomes equal to or greater than predetermined electric power; the communication unit 40 configured to use the antenna 42 that generates the predetermined communication radio wave to wirelessly communicate with one of the wireless tags 6 in the continuum M, which is the wireless tag 6(1) to be communicated, at a position facing the antenna 42; and the control unit 2 configured to control an operation of the communication unit 40 to repeatedly output the predetermined communication radio wave from the antenna 42 at a predetermined cycle time, in which the control unit 2 executes a radio wave adjustment processing of making at least one of an output of the predetermined communication radio wave or a duty ratio of the predetermined communication radio wave in a subsequent radio wave output cycle subsequent to a radio wave output cycle in which the wireless tag 6 is not activated larger than that in the radio wave output cycle in which the wireless tag 6 is not activated.

Accordingly, the control unit 2 increases at least one of the output of the predetermined communication radio wave or the duty ratio of the predetermined communication radio wave in the subsequent radio wave output cycle subsequent to the radio wave output cycle in which the wireless tag 6 is not activated. Thus, it is possible to appropriately adjust the predetermined communication radio wave output from the antenna 42 of the communication unit 40 so that the wireless tag 6 having low electromotive performance is rapidly activated.

When the output of the predetermined communication radio wave in the radio wave output cycle in which the wireless tag 6 is not activated is not a predetermined upper limit value, the control unit 2 increases the output of the predetermined communication radio wave in the subsequent radio wave output cycle.

Accordingly, an issuing speed of the wireless tag 6 can be efficiently increased.

When the output of the predetermined communication radio wave in the radio wave output cycle in which the wireless tag 6 is not activated is not the predetermined upper limit value, the control unit 2 does not increase the duty ratio of the predetermined communication radio wave in the subsequent radio wave output cycle.

In a case where there is room for increasing the output of the predetermined communication radio wave, the output of the predetermined communication radio wave is preferentially increased over the duty ratio of the predetermined communication radio wave, so that the issuing speed of the wireless tag 6 can be efficiently increased.

When the output of the predetermined communication radio wave in the radio wave output cycle in which the wireless tag 6 is not activated is the predetermined upper limit value, the control unit 2 increases the duty ratio of the predetermined communication radio wave in the subsequent radio wave output cycle.

Accordingly, even when the output of the predetermined communication radio wave cannot be increased, the issuing speed of the wireless tag 6 can be efficiently increased.

The control unit 2 executes the radio wave adjustment processing for each of the plurality of wireless tags 6 (the first mode).

Accordingly, the predetermined communication radio wave output from the antenna 42 of the communication unit 40 can be appropriately adjusted for all the wireless tags 6 to be issued. Thus, even if there is the wireless tag 6 having low electromotive performance, it is possible to suppress a decrease in the issuing speed. Further, a yield can be improved.

The control unit 2 executes the radio wave adjustment processing on the leading wireless tag 6 in the continuum M, and uses final setting values of the output of the predetermined communication radio wave and the duty ratio of the predetermined communication radio wave in a radio wave output cycle in which the leading wireless tag 6 is activated as a second setting value of the predetermined communication radio wave to be output to each of a plurality of subsequent wireless tags 6 (the fourth mode).

Accordingly, for a plurality of wireless tags 6 following the leading wireless tag 6, that is, for remaining wireless tags 6, there is a high possibility that a stable issuing speed and a stable yield can be obtained without adjusting the predetermined communication radio wave.

The control unit 2 executes the radio wave adjustment processing on a predetermined number of wireless tags 6 counting from the leading wireless tag 6 in the continuum M, and uses final setting values of the output of the predetermined communication radio wave and the duty ratio of the predetermined communication radio wave in a radio wave output cycle in which the wireless tag 6 that takes a longest time to activate among the predetermined number of wireless tags 6 is activated as the second setting value of the predetermined communication radio wave to be output to each of a plurality of subsequent wireless tags 6 (the third mode).

Accordingly, for a plurality of wireless tags 6 following the predetermined number of wireless tags 6 counting from the leading wireless tag 6 in the continuum M, that is, for remaining wireless tags 6, there is a high possibility that a stable issuing speed and a stable yield can be obtained without adjusting the predetermined communication radio wave. In addition, compared to a case where the final setting values of the leading wireless tag 6 are used as the second setting value (the fourth mode), there is a high possibility that a stable issuing speed and a stable yield can be obtained.

The leading wireless tag 6 is the wireless tag 6(1) to be communicated with which the communication unit 40 first communicates wirelessly after the continuum M is loaded in the printer 100.

Accordingly, when the continuum M is loaded in the printer 100, the predetermined communication radio wave output from the antenna 42 of the communication unit 40 can be appropriately adjusted in accordance with electromotive performance of the plurality of wireless tags 6 included in the loaded continuum M.

The leading wireless tag 6 is the wireless tag 6(1) to be communicated with which the communication unit 40 first communicates wirelessly after power of the printer 100 is turned on.

Accordingly, when the continuum M is loaded in the printer 100 while the power of the printer 100 is turned off or when maintenance or the like of the printer 100 is performed while the power of the printer 100 is turned off, the predetermined communication radio wave output from the antenna 42 of the communication unit 40 can be appropriately adjusted in accordance with the electromotive performance of the plurality of wireless tags 6 included in the loaded continuum M.

The communication unit 40 reads information from the wireless tag 6 and does not write information to the wireless tag 6.

In this case, the printer 100 may not have a function as a writing device that writes information to the wireless tag 6. Thus, cost of the printer 100 can be reduced.

The printer 100 includes a print unit 20 that performs printing on the wireless tag 6.

Accordingly, information such as characters, symbols, figures, or bar codes can be printed on the wireless tag 6.

The printer 100 includes the housing 10 that covers an internal space, and the functional member 50 that is provided in at least one of a predetermined inner surface of the housing 10 or the internal space and reduces an influence of a radio wave on the wireless tag 6.

Accordingly, the functional member 50 can reduce the influence of the radio wave on the wireless tag 6.

A communication method of the wireless tag 6 is BLUETOOTH (registered trademark) Low Energy.

In this case, a communicable distance is longer than that of near field communication (NFC, registered trademark), and power consumption is smaller than that of WI-FI (registered trademark).

### [Second Embodiment]

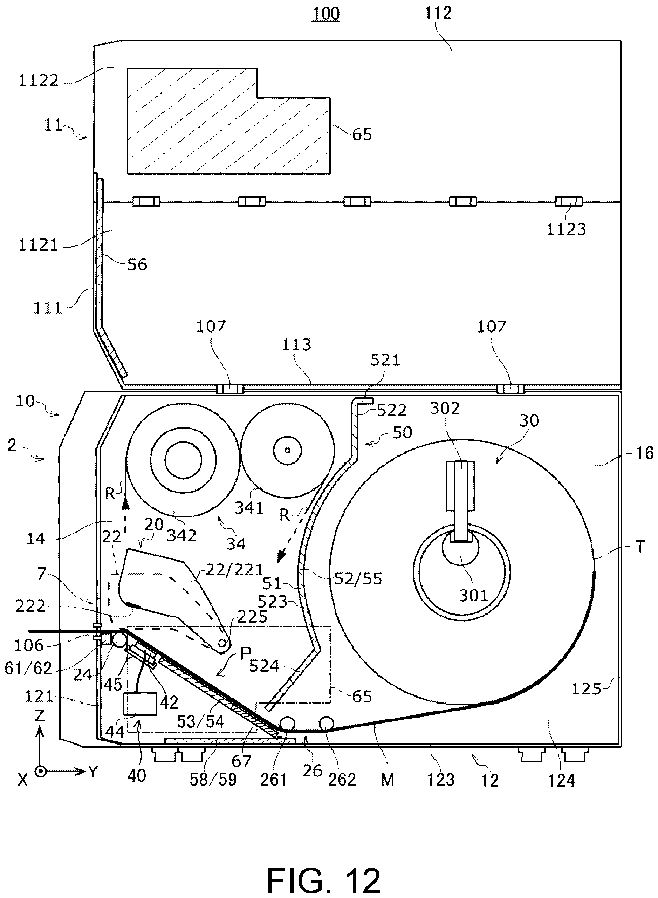

Hereinafter, the printer 100 according to a second embodiment of the present invention will be described with reference to FIG. 12. In the drawings and description of the second embodiment, the same or equivalent components and members as those of the first embodiment are denoted by the same reference numerals. Description overlapping with the first embodiment will be omitted as appropriate, and configurations different from the first embodiment will be mainly described.

FIG. 12 is a side view showing an inside of the printer 100 according to the second embodiment, and corresponds to FIG. 3.

The printer 100 in the second embodiment is different from the first embodiment in the configuration of the functional member 50, and the other configurations are the same.

The printer 100 of the second embodiment is different from the first embodiment in that the partition member 51 is integrally formed and has a different shape.

As shown in FIG. 12, the partition metal body 52 is a strip-shaped member having a predetermined length in the width direction and extending substantially vertically. The partition metal body 52 includes a forward portion 521, a downward portion 522, a curved portion 523, and an inclined portion 524.

The forward portion 521 extends forward at a position close to the upper surface portion 113.

The downward portion 522 is bent at a front end of the forward portion 521 and extends downward.

The curved portion 523 extends downward from a lower end of the downward portion 522 while curving corresponding to an outer periphery of the print medium supply unit 30.

The inclined portion 524 is bent forward at a lower end of the curved portion 523 and extends obliquely downward.

The forward portion 521 and the inclined portion 524 of the partition metal body 52 may be fixed to the inner side surface portion 124 by screws or the like.

The printer 100 of the present embodiment has the same functions and effects as those of the first embodiment. In addition, since the partition metal body 52 is integrated, the printer 100 of the present embodiment has a reduced number of parts, is easy to assemble, and is advantageous in terms of cost.

### [Third Embodiment]

Hereinafter, the printer 100 according to a third embodiment of the present invention will be described with reference to FIGS. 13 and 14. In the drawings and description of the third embodiment, the same or equivalent components and members as those of the first embodiment are denoted by the same reference numerals. Description overlapping with the first embodiment will be omitted as appropriate, and configurations different from the first embodiment will be mainly described.

FIG. 13 is a side view showing an inside of the printer 100 according to the third embodiment, and corresponds to FIG. 3.

FIG. 14 is a schematic view showing the outside wound continuum 14. In FIG. 13, an outside wound roll T is used in which the wireless tag 6 is wound in a state of being located outside the continuum M. In this example, the continuum M is drawn out downward from a position in front of a center of the print medium supply unit 30.

The printer 100 of the third embodiment is different from the first embodiment in the configuration of the functional member 50, and the other configurations are the same.

As shown in FIG. 13, the printer 100 of the present embodiment is different from the first embodiment in that a following member 64 is provided.

The following member 64 comes into contact with an upstream portion M2 upstream of the communication unit 40 in the continuum M. In particular, the following member 64 comes into contact with the continuum M following the movement of the continuum M.

When the communication unit 40 of the printer 100 communicates with the wireless tag 6 to be communicated, a radio wave from the antenna 42 may reach another wireless tag 6 subsequent to the wireless tag 6 to be communicated. In this case, the radio wave from the antenna 42 may affect another wireless tag 6, and the printer 100 and another wireless tag 6 may malfunction. From the viewpoint of preventing such a malfunction, it is desirable to reduce the influence of the radio wave on another wireless tag 6. Therefore, the printer 100 of the present embodiment includes the following member 64 that comes into contact with and follows the upstream portion M2 upstream of the communication unit 40 of the continuum M.

The following member 64 comes into contact with the continuum M upstream of the wireless tag 6 communicating with the communication unit 40, and continuously follows the movement of the continuum M in contact therewith. In particular, the following member 64 comes into contact with a surface of the continuum M along an extending direction of the continuum M and continuously follows along the plurality of wireless tags 6.

The following member 64 may be a radio wave absorber. The following member 64 is provided so as to abut against the wireless tag 6 upstream of the wireless tag 6 facing the antenna 42. In particular, the following member 64 preferably follows the wireless tag 6 located further upstream of the wireless tag 6 upstream of and adjacent to the wireless tag 6 facing the antenna 42.

The following member 64 preferably follows the wireless tag 6 attached to a portion of the continuum M unwound from the roll T set in the print medium supply unit 30. This is because the roll T itself set in the print medium supply unit 30 does not substantially react to the radio wave because the wireless tags 6 overlap each other.

The following member 64 of the present embodiment is a strip-shaped member that has a predetermined length in the width direction and extends substantially vertically from a swing fulcrum 642 toward a swing end 643 (the other end opposite to the swing fulcrum 642). The following member 64 comes into contact with the upstream portion M2. In this case, since a distance to the upstream portion M2 can be minimized, an effect of reducing the influence can be improved.

The length of the following member 64 in the width direction may be equal to or longer than the length of the wireless tag 6 in the width direction.

The following member 64 has a following portion metal body or a following portion radio wave absorber. The following member 64 and other radio wave absorbers described herein are formed of, for example, a conductive radio wave absorbing material such as conductive fiber fabrics, a dielectric radio wave absorbing material obtained by mixing carbon powder or the like with a dielectric such as rubber, urethane foam, or polystyrene foam, a magnetic radio wave absorbing material made of a magnetic material such as iron, nickel, or ferrite, or the like.

A following mechanism of the following member 64 is not limited. In FIG. 13, the following member 64 follows the upstream portion M2 as the swing end 643 swings around the swing fulcrum 642. In particular, the following member 64 of this example follows the upstream portion M2 by the action of gravity. In this case, it is possible to simplify a configuration of the following mechanism because the following member 64 follows by its own weight. The following member 64 may be configured to follow the upstream portion M2 by being biased by a biasing member such as a spring. In this case, a following operation can be stabilized in response to a change in posture.

As shown in FIG. 13, the swing end 643 of the following member 64 is warped in a direction away from the roll T (forward in this example). In this case, a damage to the roll T caused by the swing end 643 can be suppressed.

As shown in FIG. 13, the following member 64 of the present embodiment has a shape that covers a portion of the continuum M pulled out from the roll T of the print medium supply unit 30 and a portion of the roll T set in the print medium supply unit 30. In this case, the influence of the radio wave on the portions covered by the following member 64 can be effectively reduced.

In FIG. 13, a roll T1 when an outside diameter is maximum is indicated by a solid line, and a roll T2 when the outside diameter is minimum is indicated by a broken line. As shown in FIG. 13, the following member 64 swings in accordance with a change in the outer diameter of the roll T set in the print medium supply unit 30 or a change in the position of the continuum M pulled out from the roll T. In this case, an effect of reducing the influence of the radio wave can be stabilized in response to the change in the outer diameter of the roll T. The following member 64 may be capable of responding to changes in position in the front-rear and up-down directions.

As shown in FIG. 13, the following member 64 comes into contact with a print surface of the continuum M. The following member 64 is in contact with the print surface of the continuum M facing the print head unit 22 on an upstream side of the platen roller 24 and the print head unit 22 in the feed path P of the continuum M. In this case, since a distance from the following member 64 to the wireless tag 6 can be minimized, the effect of reducing the influence can be improved.

The following member 64 may be configured to come into contact with a surface opposite to the print surface of the continuum M. In particular, the following member 64 may be configured to come into contact with the surface opposite to the print surface of the continuum M on the upstream side of the platen roller 24 and the print head unit 22 in the feed path P of the continuum M. In this case, an influence of the following member 64 on the print surface can be reduced.

The following member 64 may be configured to apply tension to the continuum M. In this case, a slack of the continuum M can be reduced, and a feed operation can be stabilized.

As shown in FIG. 13, the swing fulcrum 642 of the following member 64 is provided upstream of the communication unit 40. In this case, compared to a case where the swing fulcrum 642 is provided downstream of the communication unit 40, a degree of freedom of arrangement of the following member 64 is increased, and the following member 64 can be arranged near the upstream portion M2. The swing fulcrum 642 of the following member 64 may be provided downstream of the communication unit 40.

As shown in FIG. 13, the swing end 643 of the following member 64 is provided upstream of the swing fulcrum 642. In this case, the following member 64 can follow the upstream portion M2 by its own weight.

As shown in FIG. 13, the swing fulcrum 642 of the following member 64 is disposed on an upper side of the damper mechanism 26 for applying tension to the continuum M. In this case, interference between the swing fulcrum 642 and the damper mechanism 26 can be prevented. The swing fulcrum 642 of the following member 64 may be disposed on a lower side of the damper mechanism 26. In this case, a radio wave absorbing effect can be improved by increasing the length of the following member 64.

As shown in FIG. 13, the swing fulcrum 642 of the following member 64 faces the upstream metal body 53 having a width corresponding to the width direction of the continuum M. In this case, by narrowing a facing gap between the swing fulcrum 642 and the upstream metal body 53, the radio wave leaking from the gap can be suppressed.

In FIG. 13, the swing fulcrum 642 of the following member 64 faces the bottom-surface metal body 58. In this case, by narrowing a facing gap between the swing fulcrum 642 and the bottom-surface metal body 58, the radio wave leaking from the gap can be suppressed.

The printer 100 of the present embodiment has the same functions and effects as those of the first embodiment. In addition, the printer 100 of the present embodiment can reduce the influence of the radio wave on the wireless tag 6 of the upstream portion M2 by absorbing the radio wave by the following member 64. In addition, since the following member 64 comes into contact with and follows the upstream portion M2, the following member 64 moves following a change in the position and the shape of the upstream portion M2, and the effect of reducing the influence of the radio wave can be stabilized in response to the change in the position and the shape.

### [Fourth Embodiment]

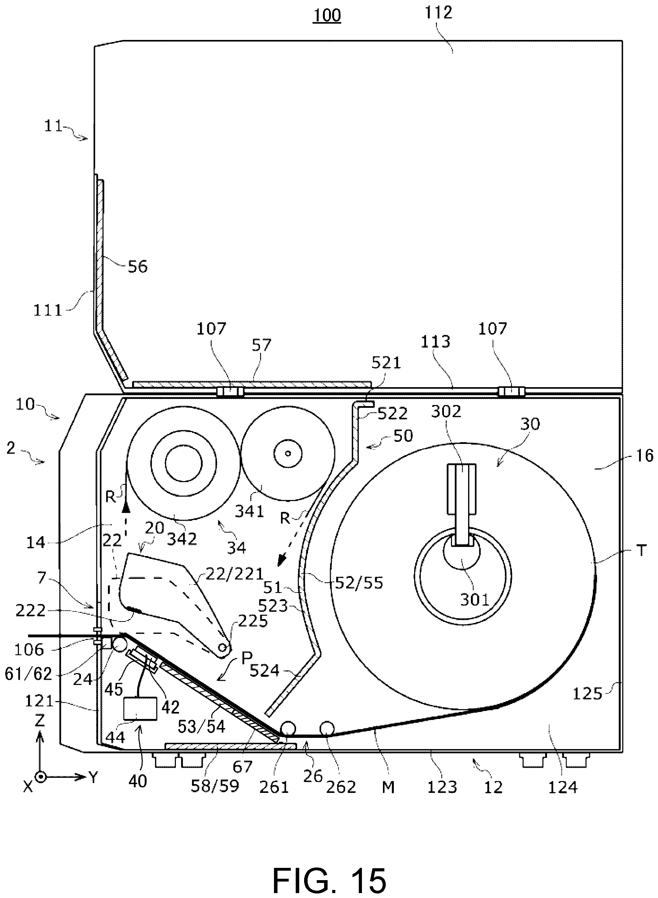

Hereinafter, the printer 100 according to a fourth embodiment of the present invention will be described with reference to FIGS. 15 to 17. In the drawings and description of the fourth embodiment, the same or equivalent components and members as those of the first embodiment are denoted by the same reference numerals. Description overlapping with the first embodiment will be omitted as appropriate, and configurations different from the first embodiment will be mainly described.

In the description of the above embodiments, an example in which the functional member 50 is not provided on the upper surface portion 113 of the opening and closing cover 11 has been described, the present invention is not limited thereto. For example, the functional member 50 may include a third cover radio wave absorber 57 as a cover radio wave absorber provided on the upper surface portion 113 of the opening and closing cover 11.

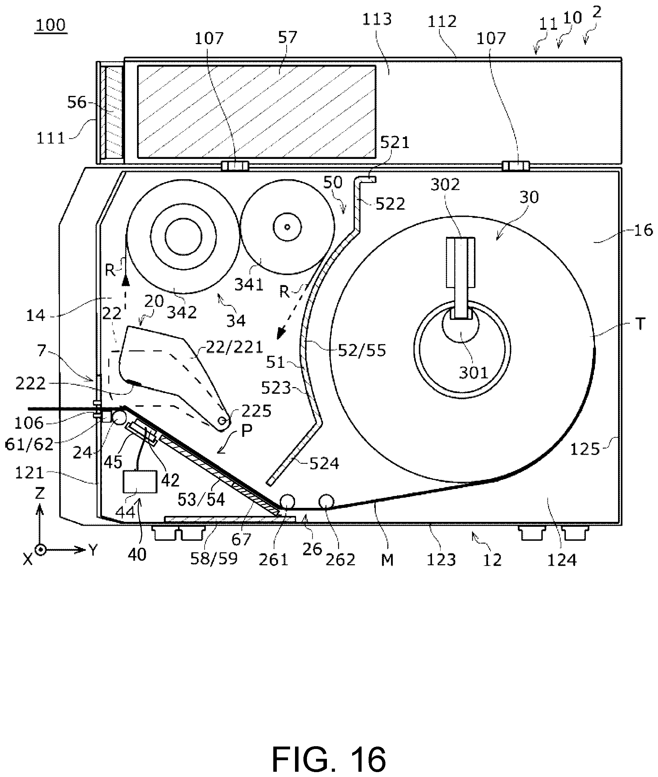

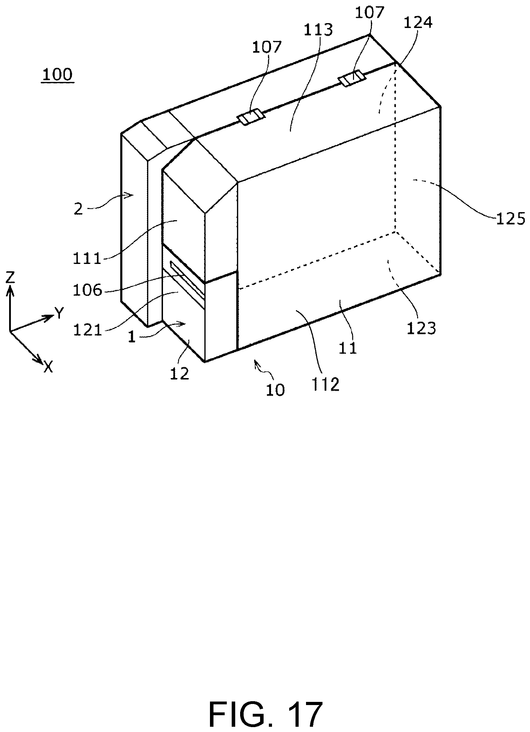

FIG. 15 is a side view showing the printer 100 according to the fourth embodiment in a state in which the opening and closing cover 11 is opened by 180 degrees. FIG. 16 is a side view showing the printer 100 of FIG. 15 in a state in which the opening and closing cover 11 is opened by 90 degrees. FIG. 17 is a perspective view of the printer 100 of FIG. 15.

The printer 100 of the present embodiment includes the third cover radio wave absorber 57 provided on the upper surface portion 113 of the opening and closing cover 11.

In the present embodiment, the opening and closing cover 11 includes the front surface portion 111, the side surface portion 112, and the upper surface portion 113.

The front surface portion 111 is a plate-shaped portion mainly extending vertically along the front surface of the print unit 1, and covers an upper side of the front surface of the print unit 1.

The upper surface portion 113 is a plate-shaped portion extending rearward from an upper end of the front surface portion 111 along an upper surface of the print unit 1.

The side surface portion 112 is a plate-shaped portion extending downward from a right end of the upper surface portion 113 along a right side surface of the print unit 1.

The opening and closing cover 11 is provided to be openable and closable by hinges 107 provided at a left end of the upper surface portion 113. One of the hinges 107 is fixed to the left end of the upper surface portion 113, and the other one is fixed to an upper end of the inner side surface portion 124. In this example, the front surface portion 111 and the side surface portion 112 are fixed to the upper surface portion 113, and the opening and closing cover 11 is integrally opened and closed.

It is considered that the radio wave radiated to the inner surface of the housing 10 is reflected and affects the wireless tag 6. Therefore, in the present embodiment, the housing 10 has the opening and closing cover 11 that covers the first space 14 in the closed state, and the opening and closing cover 11 is provided with the first cover radio wave absorber 56 and the third cover radio wave absorber 57. In this case, the first cover radio wave absorber 56 and the third cover radio wave absorber 57 absorb the radio wave to reduce the influence of the reflected radio wave. The first cover radio wave absorber 56 and the third cover radio wave absorber 57 are strip-shaped members having a predetermined length in the width direction.

The first cover radio wave absorber 56 and the third cover radio wave absorber 57 are provided on an inner surface of the opening and closing cover 11.

The first cover radio wave absorber 56 extends on a surface orthogonal to the feed direction in a state in which the opening and closing cover 11 is closed.

The third cover radio wave absorber 57 extends parallel to the width direction of the continuum M in a state in which the opening and closing cover 11 is closed.

In the present embodiment, the first cover radio wave absorber 56 is a front surface portion radio wave absorber attached to the inner surface of the front surface portion 111. For example, the first cover radio wave absorber 56 is provided in a vertical range from a vicinity of an upper end of the front surface portion 111 to a vicinity of an upper portion of the discharge port 106.

In the present embodiment, the third cover radio wave absorber 57 is an upper surface portion radio wave absorber attached to an inner surface of the upper surface portion 113. For example, the third cover radio wave absorber 57 extends rearward from a vicinity of a front end of the upper surface portion 113 and is substantially provided in a front-rear range of the first space 14.

In the printer 100 according to the fourth embodiment, the side surface portion 112 is integrated (non-divided) and does not have the second cover radio wave absorber 65. The printer 100 according to the present embodiment may be provided with the second cover radio wave absorber 65 of FIG. 3, or the side surface portion 112 may be divided into a plurality of parts.

The third cover radio wave absorber 57 is disposed on an upper portion of the partition member 51 and is partially adjacent to the partition member 51 in a state in which the opening and closing cover 11 is closed. The third cover radio wave absorber 57 and the partition member 51 may be in contact with each other or may be slightly separated from each other. This configuration can reduce leakage of the radio wave.

### [Fifth Embodiment]

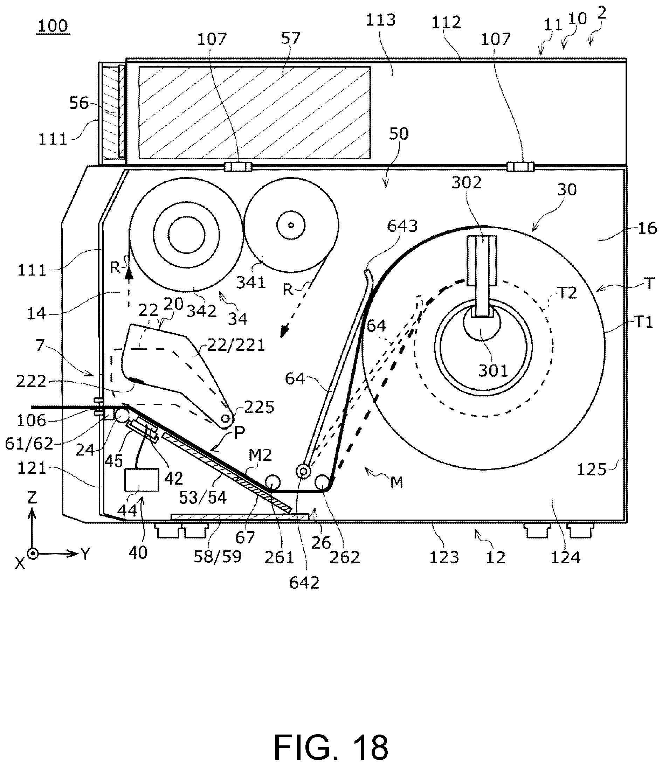

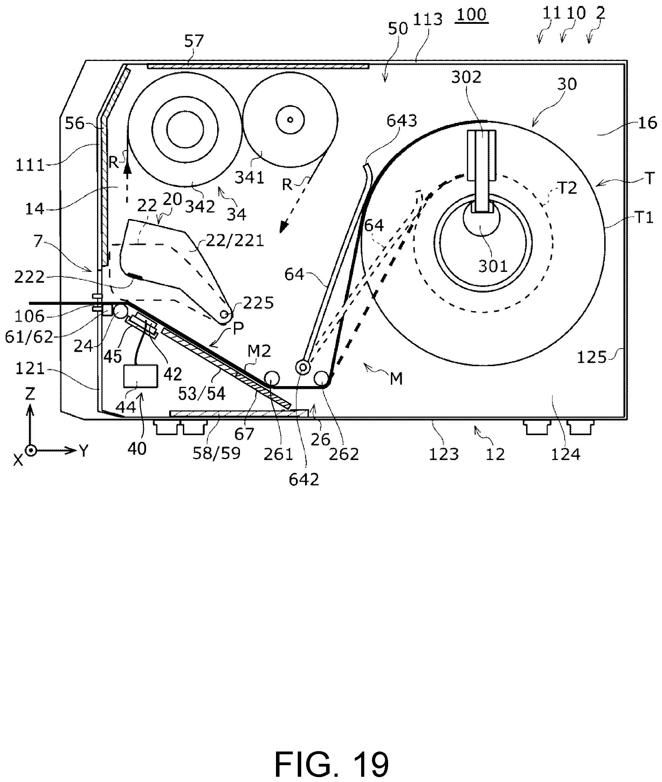

Hereinafter, the printer 100 according to a fifth embodiment of the present invention will be described with reference to FIGS. 18 and 19. In the drawings and description of the fifth embodiment, the same or equivalent components and members as those of the fourth embodiment are denoted by the same reference numerals. Description overlapping with the fourth embodiment will be omitted as appropriate, and configurations different from the fourth embodiment will be mainly described.

FIG. 18 is a side view showing the printer 100 according to the fifth embodiment in a state in which the opening and closing cover 11 is opened by 90 degrees. FIG. 19 is a side view showing an inside of the printer 100 of FIG. 18.

In the present embodiment, an outside wound roll T is used. In this example, the continuum M is drawn out downward from a position in front of a center of the print medium supply unit 30.

The printer 100 of the present embodiment is different from the fourth embodiment in that the partition member 51 is not provided and the following member 64 is provided, and the other configurations are the same.

The functional member 50 of the present embodiment includes the upstream metal body 53, the upstream radio wave absorber 54, the first cover radio wave absorber 56, the third cover radio wave absorber 57, the bottom-surface radio wave absorber 59, the downstream radio wave absorber 62, the bottom-surface metal body 58, the downstream metal body 61, and the extended metal body 67.

In the present embodiment, the upstream metal body 53 is provided downstream of the following member 64 and adjacent to the upstream side of the communication unit 40.

A front end of the bottom-surface metal body 58 is located forward of a rear end of the upstream metal body 53, and a rear end of the bottom-surface metal body 58 is located rearward of a front end of the following member 64.

As described above, the printer 100 of the present embodiment includes the following member 64 that comes into contact with the wireless tag 6 upstream of the wireless tag 6 communicating with the communication unit 40 and continuously follows the movement of the continuum M in contact therewith.

With this configuration, the influence of the radio wave on the wireless tag 6 of the upstream portion M2 can be reduced by absorbing the radio wave by the following member 64. In addition, since the following member 64 comes into contact with and follows the upstream portion M2, the following member 64 moves following a change in the position and the shape of the upstream portion M2, and the effect of reducing the influence of the radio wave can be stabilized in response to the change in the position and the shape.

### [Sixth Embodiment]

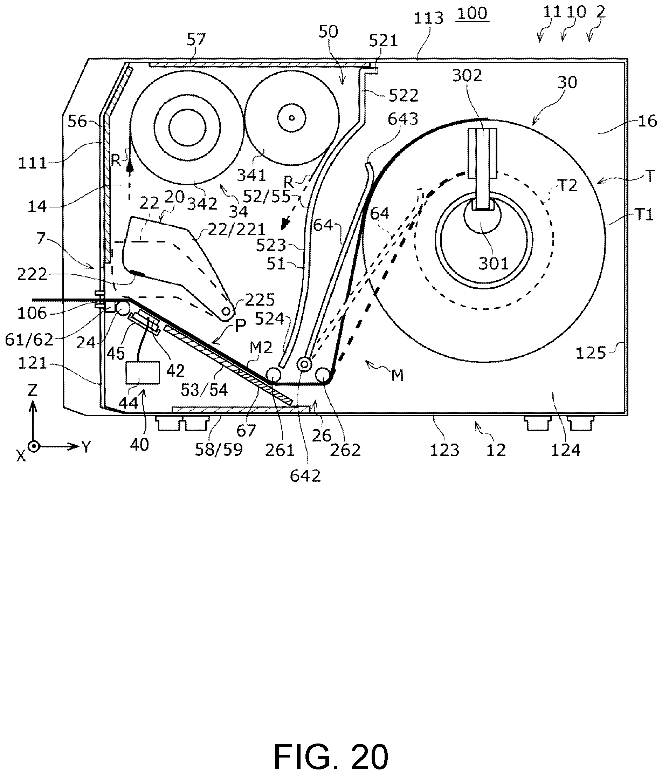

Hereinafter, the printer 100 according to a sixth embodiment of the present invention will be described with reference to FIG. 20. In the drawings and description of the sixth embodiment, the same or equivalent components and members as those of the fifth embodiment are denoted by the same reference numerals. Description overlapping with the fifth embodiment will be omitted as appropriate, and configurations different from the fifth embodiment will be mainly described.

FIG. 20 is a side view showing an inside of the printer 100 according to the sixth embodiment.

In the present embodiment, an outside wound roll T is used. In this example, the continuum M is drawn out downward from a position in front of a center of the print medium supply unit 30.

The printer 100 of the present embodiment is different from the fifth embodiment in the configuration of the functional member 50, and the other configurations are the same.

As shown in FIG. 20, the printer 100 of the present embodiment is different from the fifth embodiment in that the printer 100 includes the partition member 51 that partitions the first space 14 that accommodates the print unit 20 and the communication unit 40 and the second space 16 different from the first space 14. In this example, the partition member 51 is fixed to the inner side surface portion 124 of the housing main body 12.

In the present embodiment, the second space 16 is a space surrounding the wireless tag 6 upstream of the wireless tag 6 accommodated in the first space 14 among the plurality of wireless tags 6. In this case, the influence of the radio wave on the space surrounding the upstream wireless tag 6 can be efficiently reduced by the partition member 51.

The partition member 51 of the present embodiment includes the partition metal body 52 and the partition radio wave absorber 55. In this case, the influence of the radio wave on the wireless tag 6 in the second space 16 can be reduced by shielding the radio wave with the partition metal body 52. By absorbing the radio wave with the partition radio wave absorber 55, the influence of the radio wave on the wireless tag 6 in the second space 16 can be reduced. The partition metal body 52 and the partition radio wave absorber 55 are laminated and integrated.

As shown in FIG. 20, the partition metal body 52 is a strip-shaped member having a predetermined length in the width direction and extending substantially vertically. The partition metal body 52 includes the forward portion 521, the downward portion 522, the curved portion 523, and the inclined portion 524.

The forward portion 521 extends forward at a position close to the upper surface portion 113.

The downward portion 522 is bent at a front end of the forward portion 521 and extends downward.

The curved portion 523 extends downward from a lower end of the downward portion 522 while curving corresponding to an outer periphery of the print medium supply unit 30.

The inclined portion 524 is bent forward at a lower end of the curved portion 523 and extends obliquely downward.

The forward portion 521 and the inclined portion 524 of the partition metal body 52 may be fixed to the inner side surface portion 124 by screws or the like.

The partition radio wave absorber 55 may be provided over an entire length and width of the partition metal body 52, or may be provided on a part thereof.

The printer 100 of the present embodiment has the same functions and effects as those of the fifth embodiment. In addition, by providing the partition member 51 that partitions the first space 14 that accommodates the print unit 20 and the communication unit 40 and the second space 16 different from the first space 14, the radio wave from the antenna 42 in the first space 14 hardly reaches the second space 16. Thus, the influence of the radio wave on the wireless tag 6 in the second space 16 can be reduced.

The embodiments of the present invention have been described in detail above. Each of the above embodiments merely shows a specific example for carrying out the present invention. The contents of each embodiment are not intended to limit the technical scope of the present invention to the specific configurations of the above embodiments, and many modifications such as changing, adding, or deleting components can be made.

Hereinafter, modifications will be described. In the drawings and description of modifications, the same or equivalent components and members as those of the embodiments are denoted by the same reference numerals. Description overlapping with the embodiments will be omitted as appropriate, and configurations different from the embodiments will be mainly described.

### [First Modification and Second Modification]

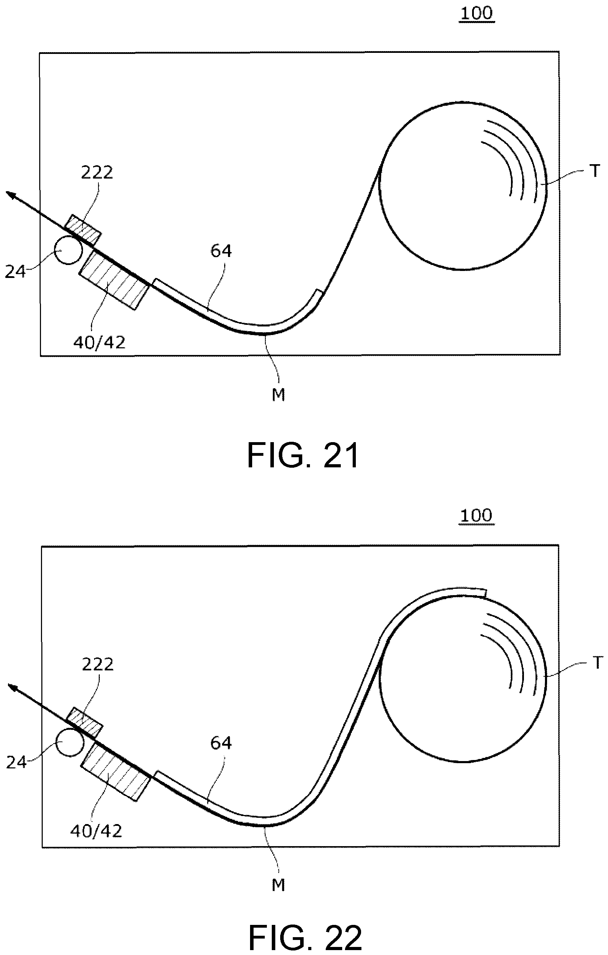

A first modification and a second modification will be described with reference to FIGS. 21 and 22. FIG. 21 is a schematic view showing the following member 64 according to the first modification. FIG. 22 is a schematic view showing the following member 64 according to the second modification. In order to facilitate understanding, these figures mainly show the continuum M and the following member 64, and the description of members that are not important for the explanation is omitted.

It is suggested that an effect of reducing an influence of a radio wave is high when the following member 64 is disposed in a range from immediately behind an upstream side of the antenna 42 of the communication unit 40 to a downstream side of the roll T. From this viewpoint, the following member 64 in FIGS. 21 and 22 is disposed immediately behind the upstream side of the antenna 42.

In the first modification, the following member 64 extends along an upper surface of the continuum M in a range from immediately behind the upstream side of the antenna 42 to a position lower than a lower end of the roll T. In this example, the following member 64 is curved following a curve of the continuum M.

The following member 64 is curved in a downward convex shape and has a substantially J-shape reversed in the left and right directions. Since the wireless tag 6 overlaps the roll T, the wireless tag 6 is hardly affected by the radio wave. Therefore, the following member 64 does not have a portion that covers the roll T.

In the second modification, the following member 64 extends along the upper surface of the continuum M in a range from immediately behind the upstream side of the antenna 42 to an upstream side of an upper end of the roll T. In this example, the following member 64 is curved following the curve of the continuum M, and has a portion that covers the roll T.

The following member 64 has a substantially inclined S-shape in which a downward convex curve and an upward convex curve are continuous.

FIGS. 21 and 22 illustrate an example in which the continuum M is outside wound, but the continuum M may be inside wound.

### [Other Modifications]

A following portion metal body may be provided integrally with the following member 64. In this case, the following portion metal body may be laminated over an entire length and width of the following member 64 or may be laminated partially. Further, the following portion metal body may be provided on either a front surface or a back surface of the following member 64.

In the description of the embodiment, the example has been shown in which the functional member 50 includes all of the upstream metal body 53, the upstream radio wave absorber 54, the first cover radio wave absorber 56, the second cover radio wave absorber 65, the bottom-surface radio wave absorber 59, the downstream radio wave absorber 62, the bottom-surface metal body 58, the downstream metal body 61, and the extended metal body 67, but the present invention is not limited thereto. It is not essential that the functional member 50 includes these components. The functional member 50 may not include some or all of these components.

In the description of the embodiment, the example is shown in which all of these components are partitioned by the partition member 51, but the present invention is not limited thereto. It is assumed that the entire space is partitioned by the partition member 51. However, the partition member 51 may be formed so as to be able to prevent leakage of radio waves from gaps on both sides in the width direction of the partition member 51.

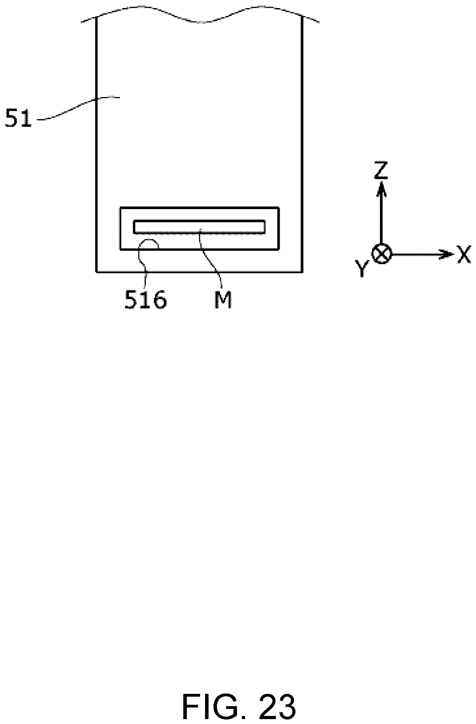

FIG. 23 is a diagram showing a modification of the partition member 51. As shown in FIG. 23, the partition member 51 may be provided with an insertion hole 516 through which the continuum M is inserted. The provision of the insertion hole 516 increases a degree of freedom in designing the partition member 51. Further, the leakage from both sides can be prevented.

In the description of the second embodiment, the example is shown in which the partition member 51 is fixed to the housing main body 12, but the present invention is not limited thereto. For example, the partition member 51 may be fixed to the opening and closing cover 11.

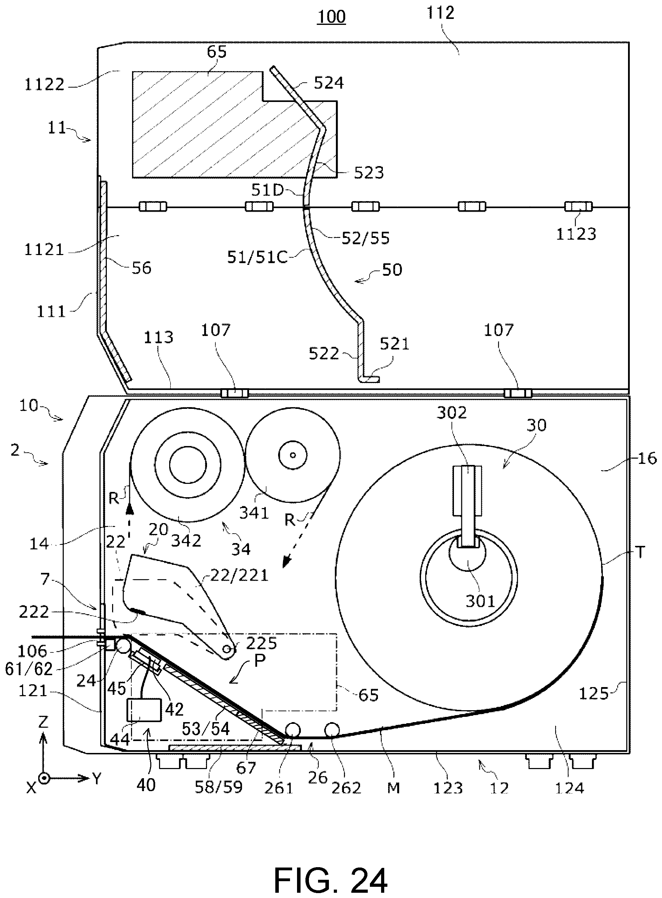

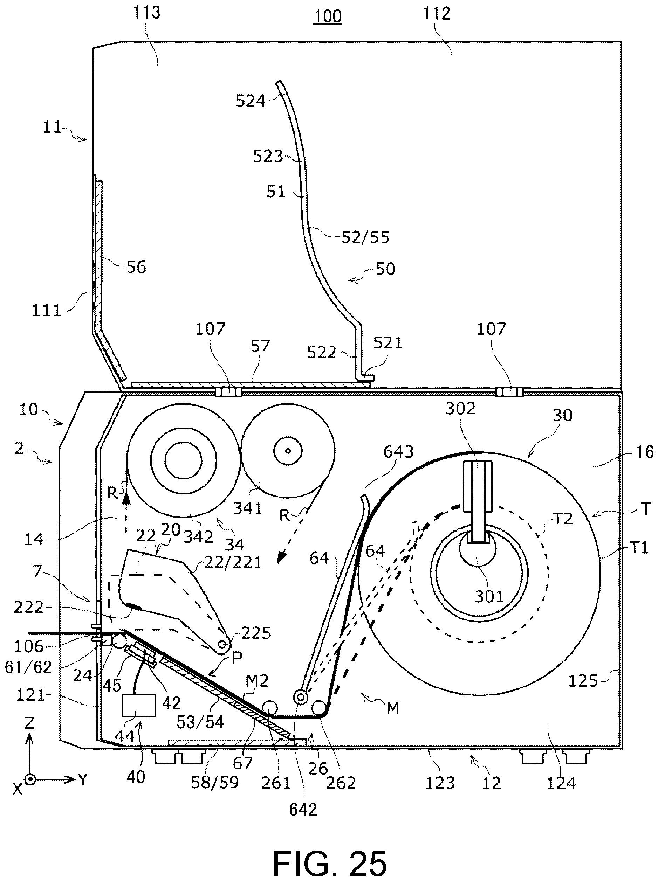

FIG. 24 is a diagram showing a modification in which the partition member 51 is fixed to the opening and closing cover 11. FIG. 25 is a diagram showing another modification in which the partition member 51 is fixed to the opening and closing cover 11. These figures are a side view showing a state in which the opening and closing cover 11 is opened by 180 degrees. In this way, by fixing the partition member 51 to the opening and closing cover 11, a periphery of the print medium supply unit 30 becomes wider in a state in which the opening and closing cover 11 is opened, and thus the roll T is easily replaced.

In FIG. 24, the partition member 51 is divided into a first partition member 51C fixed to the first side surface portion 1121 and a second partition member 51D fixed to the second side surface portion 1122. The first partition member 51C and the second partition member 51D are combined to form one partition member 51.

FIG. 24 shows an example in which the entire partition member 51 is fixed to the opening and closing cover 11, but the present invention is not limited thereto. For example, the partition member 51 may be divided so that a part thereof is fixed to the housing main body 12 and the other part thereof is fixed to the opening and closing cover 11. Further, in a state in which the opening and closing cover 11 is closed, both parts may be combined to form one partition member 51.

In the description of the embodiment, the example is shown in which the print medium supply unit 30 does not have a function of applying tension to the continuum M, but the present invention is not limited thereto. When the tension of the continuum M is weak, it is considered that the continuum M is excessively drawn out and slackens in the middle of the feed path P. When the continuum M slackens, a positional relationship with the functional member 50 changes, and the effect of reducing the influence of the radio wave on the wireless tag 6 may be reduced. Therefore, a tension applying mechanism 31 may be provided in the print medium supply unit 30.

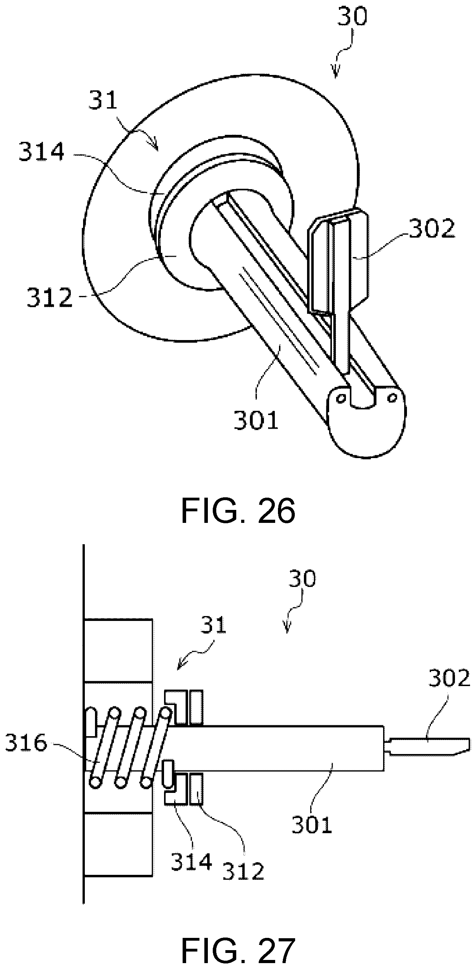

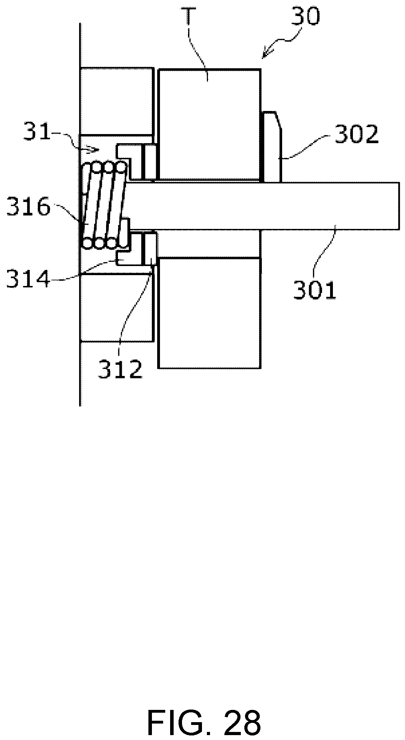

FIG. 26 is a perspective view showing a modification of the print medium supply unit 30. FIG. 27 is a diagram showing a state in which the roll T is not attached to the print medium supply unit 30 of FIG. 26. FIG. 28 is a diagram showing a state in which the roll T is attached to the print medium supply unit 30 of FIG. 26.

The print medium supply unit 30 of the present modification includes the tension applying mechanism 31. The tension applying mechanism 31 is a mechanism for applying tension to the continuum M pulled out from the roll T of the print medium supply unit 30.

The tension applying mechanism 31 includes the support shaft 301, the roll guide unit 302, a tension plate 312, a spring pressing plate 314, and a biasing member 316.

The tension plate 312 is a hollow disk-shaped member in contact with a central portion of the attached roll T. The support shaft 301 is inserted through a hollow portion of the tension plate 312.

The spring pressing plate 314 is a hollow disk-shaped member disposed adjacent to the tension plate 312 on a side opposite to the roll T. The support shaft 301 is inserted through the hollow portion of the spring pressing plate 314, and the spring pressing plate 314 is in contact with the tension plate 312 so as to be rotatable relative to the tension plate 312.

The biasing member 316 is disposed on a side of the spring pressing plate 314 opposite to the tension plate 312. The biasing member 316 applies a biasing force toward the roll T to the tension plate 312 via the spring pressing plate 314. The biasing member 316 of this modification is a coil spring through a center of which the support shaft 301 is inserted.

As shown in FIG. 27, in a state in which the roll T is not attached to the print medium supply unit 30, there is little biasing force applied to the tension plate 312, and the tension plate 312 can freely rotate.

As shown in FIG. 28, in a state in which the roll T is attached to the print medium supply unit 30, the roll guide unit 302 presses the roll T toward the tension plate 312 side along the support shaft 301, and thus the biasing member 316 is strongly compressed via the spring pressing plate 314. Therefore, the biasing member 316 applies a large biasing force to the tension plate 312 via the spring pressing plate 314. In this case, the spring pressing plate 314 is strongly pressed against the tension plate 312, and a frictional force therebetween increases.

In this state, when the continuum M is drawn out and the roll T rotates, the rotation of the tension plate 312 and the roll T is braked by the frictional force between the tension plate 312 and the spring pressing plate 314. In this way, the tension applying mechanism 31 can brake the rotation of the roll T by the tension plate 312 coming into contact with an end of the roll T. As a result, the tension is applied to the continuum M, and a possibility that the continuum M is excessively drawn out and slackens is reduced.

A method for controlling an output of the predetermined communication radio wave (hereinafter, referred to as an "energization output" or an "electromotive output") for electrifying (energizing) the wireless tag 6 is not limited to the example of the above embodiment.

For example, in a first period in which data is read from the wireless tag 6 to be communicated, the energization output (the electromotive output) may be increased, and in a second period other than when the data is read, the energization output (the electromotive output) may be set to be lower than that in the first period. In the second period, the energization output (the electromotive output) may be minimized, or the energization output (the electromotive output) may be stopped.

In this way, by controlling the energization output (the electromotive output), it is possible to suppress erroneous detection of the wireless tag 6 upstream of the wireless tag 6 to be communicated in the second period.

The second period includes a period of a waiting state. The waiting state refers to a state in which power of a module is turned on (that is, the printer 100 is turned on), but the communication unit 40 does not substantially emit a radio wave including the electromotive output. The communication unit 40 may be configured to emit a radio wave only when printing is performed.

Due to an individual difference of the housing 10, the degree of the influence of the radio wave on the wireless tag 6 may change, resulting in an error. Therefore, the output of the radio wave may be adjusted according to the individual difference of the housing 10 so as to reduce the influence of the individual difference of the housing 10.

For example, a radio wave output can be adjusted by providing an adjustment process in a manufacturing process of the printer 100. In addition, a configuration may be adopted in which a detection unit that detects information according to an individual difference of the housing 10 and an output adjustment unit that increases or decreases a radio wave output according to a detection result of the detection unit are provided and the output is automatically adjusted.

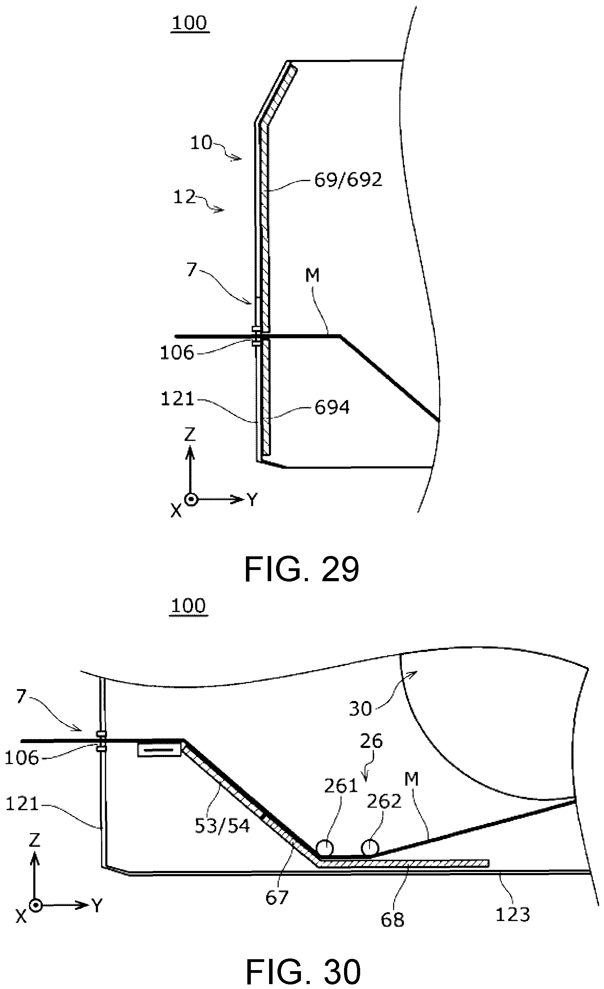

A modification including a front-surface radio wave absorbing plate 69 will be described with reference to FIG. 29. FIG. 29 is a side view showing the modification including the front-surface radio wave absorbing plate 69.

In the description of the embodiment, the example is shown in which a radio wave absorbing plate is not provided on the front surface portion 121 of the housing main body 12, but the present invention is not limited thereto. As shown in FIG. 29, in the printer 100, the front-surface radio wave absorbing plate 69 may be provided on the front surface portion 121 of the housing main body 12. In this case, the front-surface radio wave absorbing plate 69 can reduce an influence of radio wave leakage to a front side of the housing 10. The front-surface radio wave absorbing plate 69 may include one or both of a radio wave absorber and a metal body.

In FIG. 29, the front-surface radio wave absorbing plate 69 is attached to an inner surface of the front surface portion 121. In this modification, the front-surface radio wave absorbing plate 69 includes a first portion 692 and a second portion 694.

The first portion 692 is a portion in a vertical range from a vicinity of an upper end of the front surface portion 121 to a vicinity of an upper portion of the discharge port 106. The second portion 694 is a portion in a vertical range from a vicinity of a lower portion of the discharge port 106 to a vicinity of a lower end of the front surface portion 121.

The front-surface radio wave absorbing plate 69 does not necessarily have to include the first portion 692 and the second portion 694, and may not include one of the portions. An upper end position and a lower end position of each portion of the front-surface radio wave absorbing plate 69 can be experimentally set according to a desired reduction level related to the influence of the radio wave.

A modification including the upstream radio wave absorbing plate 68 disposed upstream of the extended metal body 67 will be described with reference to FIG. 30. FIG. 30 is a side view showing the modification including the upstream radio wave absorbing plate 68.

In the description of the embodiment, the example is shown in which the radio wave absorber and the metal body are not provided upstream of the extended metal body 67, but the present invention is not limited thereto. When sensitivity of the wireless tag 6 is high, even a weak radio wave may affect the wireless tag 6. Therefore, as shown in FIG. 30, in the printer 100, the upstream radio wave absorbing plate 68 may be provided upstream of the extended metal body 67 on the feed path P. In this case, the influence of the radio wave on the wireless tag 6 upstream of the extended metal body 67 can be reduced by the upstream radio wave absorbing plate 68.

The upstream radio wave absorbing plate 68 may include one or both of the radio wave absorber and the metal body. By arranging the upstream radio wave absorbing plate 68 along the continuum M, it is possible to reduce the influence of the radio wave on the wireless tag 6 which is not desired to receive the radio wave. The upstream radio wave absorbing plate 68 may not be in contact with the continuum M or may be in contact with the continuum M.

From the viewpoint of reducing the influence of the radio wave, the upstream radio wave absorbing plate 68 may be provided on the print surface of the continuum M, or may be provided on a surface opposite to the print surface of the continuum M. In FIG. 30, the upstream radio wave absorbing plate 68 is provided on the surface opposite to the print surface of the continuum M. In this case, a damage to the print surface is reduced.

The upstream radio wave absorbing plate 68 may be formed as a member separate from the extended metal body 67 or may be formed as a member integrated with the extended metal body 67.

In the example of FIG. 30, the upstream radio wave absorbing plate 68 extends from an upstream end of the extended metal body 67 toward the rear of the printer 100. Specifically, the upstream radio wave absorbing plate 68 extends in the front-rear direction to a vicinity of the print medium supply unit 30 beyond the damper mechanism 26.

A position of the upstream end of the upstream radio wave absorbing plate 68 can be experimentally set according to a desired reduction level related to the influence of the radio wave. A length of the upstream radio wave absorbing plate 68 in the width direction may be the same as the length of the extended metal body 67 in the width direction.

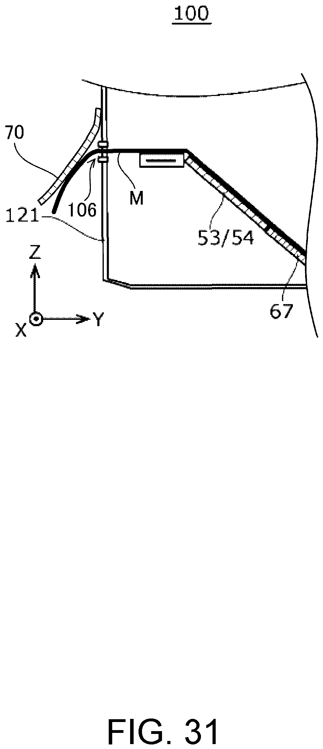

A modification including a discharge port upper-side radio wave absorber 70 disposed outside the discharge port 106 will be described with reference to FIG. 31. FIG. 31 is a side view showing the modification including the discharge port upper-side radio wave absorber 70.

As shown in FIG. 31, the printer 100 may be provided with the discharge port upper-side radio wave absorber 70 so as to cover the discharge port 106 from the outside.

An upper end of the discharge port upper-side radio wave absorber 70 is attached to an upper side of the discharge port 106 in the front surface portion 121 of the housing main body 12. A lower end of the discharge port upper-side radio wave absorber 70 is a free end. Therefore, the continuum M discharged from the discharge port 106 is discharged downward while pushing aside the discharge port upper-side radio wave absorber 70. In this case, the influence of the radio wave on the wireless tag 6 discharged from the discharge port 106 can be reduced by the discharge port upper-side radio wave absorber 70.

A lower end position and a width of the discharge port upper-side radio wave absorber 70 can be experimentally set according to a desired reduction level related to the influence of the radio wave.

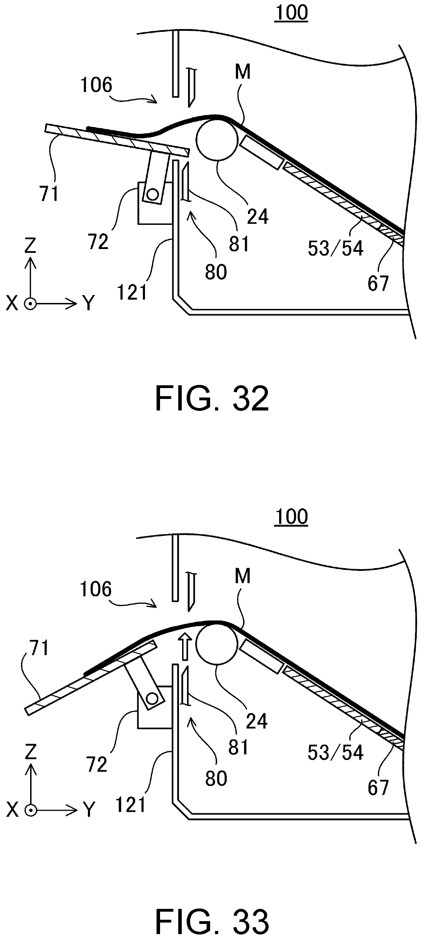

A modification including a discharge port lower-side radio wave absorber 71 disposed outside the discharge port 106 will be described with reference to FIGS. 32 and 33. FIG. 32 is a side view showing the modification including the discharge port lower-side radio wave absorber 71. FIG. 33 is a diagram showing a state in which a cutter mechanism 80 operates in the modification including the discharge port lower-side radio wave absorber 71.

As shown in FIG. 32, the printer 100 may be provided with the discharge port lower-side radio wave absorber 71 so as to support the continuum M discharged from the discharge port 106 from a lower side.

The discharge port lower-side radio wave absorber 71 is supported by a swing mechanism 72 attached to a lower side of the discharge port 106 in the front surface portion 121 of the housing main body 12. The continuum M discharged from the discharge port 106 comes into contact with the discharge port lower-side radio wave absorber 71 by its own weight. In this case, the influence of the radio wave on the wireless tag 6 discharged from the discharge port 106 can be reduced by the discharge port lower-side radio wave absorber 71.

One end of the discharge port lower-side radio wave absorber 71 extends to a vicinity of the platen roller 24. Therefore, when the cutter mechanism 80 is operated, as shown in FIG. 33, the swing mechanism 72 swings the discharge port lower-side radio wave absorber 71 so that the other end is lowered. Accordingly, the one end of the discharge port lower-side radio wave absorber 71 can be prevented from interfering with a movable blade 81 of the cutter mechanism 80.

Instead of the discharge port lower-side radio wave absorber 71, a discharge port lower-side metal body may be provided. Also in this case, the influence of the radio wave on the wireless tag 6 discharged from the discharge port 106 can be reduced.

Both the discharge port upper-side radio wave absorber 70 and the discharge port lower-side radio wave absorber 71 may be provided. In this case, since the wireless tag 6 discharged from the discharge port 106 is vertically nipped between the discharge port upper-side radio wave absorber 70 and the discharge port lower-side radio wave absorber 71, the influence of the radio wave on the wireless tag 6 can be further reduced.

In the description of the embodiment, the example is shown in which the print unit 20 performs printing using heat, but the present invention is not limited thereto. The print unit 20 can employ a known printing method such as an inkjet method.

The printer 100 may not include the functional member 50.

Each of the above modifications has the same operation and effect as those of the embodiment.

Any combination of the components of the above embodiments and the modifications is also useful as an embodiment of the present invention. A new embodiment resulting from the combination has respective effects of the combined embodiments and modifications.

The present application claims a priority of Japanese Patent Application No. 2022-53980 filed with the Japan Patent Office on March 29, 2022, all the contents of which are hereby incorporated by reference.

## Claims

1. A printer comprising:
a feed path configured to allow a continuum to be fed therethrough, the continuum having a plurality of wireless tags provided at predetermined intervals and activated when electric power generated by a predetermined communication radio wave is equal to or greater than predetermined electric power;
a communication unit configured to use an antenna that generates the predetermined communication radio wave to wirelessly communicate with one of the wireless tags in the continuum, which is a wireless tag to be communicated, at a position facing the antenna; and
a controller configured to control an operation of the communication unit to repeatedly output the predetermined communication radio wave from the antenna at a predetermined cycle time, wherein
the controller executes a radio wave adjustment processing of making at least one of an output of the predetermined communication radio wave or a duty ratio of the predetermined communication radio wave in a subsequent radio wave output cycle subsequent to a radio wave output cycle in which the wireless tag is not activated larger than that in the radio wave output cycle in which the wireless tag is not activated.

2. The printer according to claim 1, wherein
when the output of the predetermined communication radio wave in the radio wave output cycle in which the wireless tag is not activated is not a predetermined upper limit value, the controller increases the output of the predetermined communication radio wave in the subsequent radio wave output cycle.

3. The printer according to claim 2, wherein
when the output of the predetermined communication radio wave in the radio wave output cycle in which the wireless tag is not activated is not the predetermined upper limit value, the controller does not increase the duty ratio of the predetermined communication radio wave in the subsequent radio wave output cycle.

4. The printer according to claim 2 or 3, wherein
when the output of the predetermined communication radio wave in the radio wave output cycle in which the wireless tag is not activated is the predetermined upper limit value, the controller increases the duty ratio of the predetermined communication radio wave in the subsequent radio wave output cycle.

5. The printer according to any one of claims 1 to 4, wherein
the controller executes the radio wave adjustment processing on each of the plurality of wireless tags.

6. The printer according to any one of claims 1 to 4, wherein
the controller executes the radio wave adjustment processing on a leading wireless tag in the continuum, and uses setting values of the output of the predetermined communication radio wave and the duty ratio of the predetermined communication radio wave in a radio wave output cycle in which the leading wireless tag is activated as setting values of the predetermined communication radio wave to be output to each of a plurality of subsequent wireless tags.

7. The printer according to any one of claims 1 to 4, wherein
the controller executes the radio wave adjustment processing on a predetermined number of wireless tags counting from a leading wireless tag in the continuum, and uses setting values of the output of the predetermined communication radio wave and the duty ratio of the predetermined communication radio wave in a radio wave output cycle in which a wireless tag that takes a longest time to activate among the predetermined number of wireless tags is activated as setting values of the predetermined communication radio wave to be output to each of a plurality of subsequent wireless tags.

8. The printer according to claim 6 or 7, wherein
the leading wireless tag is the wireless tag to be communicated with which the communication unit first communicates wirelessly after the continuum is loaded in the printer.

9. The printer according to claim 6 or 7, wherein
the leading wireless tag is the wireless tag to be communicated with which the communication unit first communicates wirelessly after power of the printer is turned on.

10. The printer according to any one of claims 1 to 9, wherein
the communication unit reads information from the wireless tag and does not write information to the wireless tag.

11. The printer according to any one of claims 1 to 10, further comprising:
a print unit configured to perform printing on the wireless tag.

12. The printer according to any one of claims 1 to 11, further comprising:
a housing configured to cover an internal space; and
a functional member provided in at least one of a predetermined inner surface of the housing or the internal space, and configured to reduce an influence of a radio wave on the wireless tag.

13. The printer according to any one of claims 1 to 12, wherein
a communication method of the wireless tag is BLUETOOTH Low Energy.

14. A method for controlling a printer, the printer including:
a feed path configured to allow a continuum to be fed therethrough, the continuum having a plurality of wireless tags provided at predetermined intervals and activated when electric power generated by a predetermined communication radio wave is equal to or greater than predetermined electric power;
a communication unit configured to use an antenna that generates the predetermined communication radio wave to wirelessly communicate with one of the wireless tags in the continuum, which is a wireless tag to be communicated, at a position facing the antenna; and
a controller configured to control an operation of the communication unit to repeatedly output the predetermined communication radio wave from the antenna at a predetermined cycle time, the method comprising:
making at least one of an output of the predetermined communication radio wave or a duty ratio of the predetermined communication radio wave in a subsequent radio wave output cycle subsequent to a radio wave output cycle in which the wireless tag is not activated larger than that in the radio wave output cycle in which the wireless tag is not activated.

15. A computer-executable program for a printer, the printer including:
a feed path configured to allow a continuum to be fed therethrough, the continuum having a plurality of wireless tags provided at predetermined intervals and activated when electric power generated by a predetermined communication radio wave is equal to or greater than predetermined electric power; and
a communication unit configured to use an antenna that generates the predetermined communication radio wave to wirelessly communicate with one of the wireless tags in the continuum, which is a wireless tag to be communicated, at a position facing the antenna, the program causing a computer to execute
a process of controlling an operation of the communication unit to repeatedly output the predetermined communication radio wave from the antenna at a predetermined cycle time, and
a process of making at least one of an output of the predetermined communication radio wave or a duty ratio of the predetermined communication radio wave in a subsequent radio wave output cycle subsequent to a radio wave output cycle in which the wireless tag is not activated larger than that in the radio wave output cycle in which the wireless tag is not activated.
